# EUROPEAN PATENT APPLICATION

(11) **EP 4 745 943 A1**
(43) Date of publication of application: **20.05.2026**
(21) Application number: 25210310.6
(22) Date of filing: 22.10.2025
(51) Int. Cl.: G09F 3/02

(54) **IDENTIFICATION SYSTEM AND METHOD FOR A PIPE**

(30) Priority: 19.11.2024 US 202418952466
(71) Applicant: Brady Worldwide, Inc., Milwaukee, Wisconsin 53223 (US)
(72) Inventor: ENGER, Andrew, Muskego, 53150 (US); GLADKOV, Gene, Muskego, 53150 (US); HALLETT, Timothy P., Grafton, 53024 (US)
(74) Representative: Viering, Jentschura & Partner mbB Patent- und Rechtsanwälte

(57) **Abstract**

The present disclosure is directed to an identification system for an elongate object. The identification system includes a panel, a standoff configured to retain the panel at a distance from the elongate object, a connection member configured to couple the standoff to the elongate object, and a spring member configured to engage the panel when the panel is installed on the standoff. The standoff includes a first retention mechanism positioned proximate to a first end of the standoff and a second retention mechanism positioned proximate to a second end of the standoff. The first retention mechanism configured to receive a first edge of the panel, and the second retention mechanism is configured to receive a second edge of the panel.

## Description

### FIELD OF INVENTION

This disclosure relates to an identification system and method for an elongate object such as a pipe, and more particularly to a system and method for applying a pipe marker to a pipe using one or more pipe marker standoffs.

### BACKGROUND

Pipe markers are used to label elongate objects such as pipes in a variety of applications. Pipe markers are typically provided in the form of a panel identifying the contents of a pipe, the direction of flow, associated hazards, and/or other relevant information associated with the pipe to which the pipe marker is applied. Thus, pipe markers are essential for safety and maintenance in industrial settings. A pipe marker standoff is a device used to attach a pipe marker to a pipe while retaining the pipe marker at a distance from the surface of the pipe. For example, standoffs are particularly useful in cases when the pipe being labeled is insulated, has an irregular surface, or has other characteristics making direct application of a pipe marker difficult.

Existing standoffs present several challenges that can increase the difficulty, cost, and time commitment associated with applying, removing, and exchanging or altering pipe markers. For example, in some instances, the pipe marker is provided in the form of a panel that is bolted to the associated standoffs or otherwise coupled to the associated standoffs using one or more fasteners. In these instances, there is some expense associated with obtaining the bolts or fasteners and workers must expend time and energy to manually install the panel. Additionally, in many cases, the use of one or more additional tools (e.g., a drill) is required for installation.

In other instances, the pipe marker is provided in the form of an extruded panel with molded legs designed to be received by slots or clips positioned on the standoff to secure the pipe marker in place. In these instances, manufacturing the extruded panel of the pipe marker is expensive and requires the use of complex machinery (e.g., an extruder, die, heaters, cutting equipment, etc.). Additionally, the molded legs of the pipe marker and the slots or clips on the standoff present several potential points of failure of the device. For example, if the molded legs of the pipe marker are bent or warped (e.g., due to being dropped, subject to external stresses, etc.), the pipe marker may no longer be installable on the standoff and may require replacement.

To avoid or mitigate the aforementioned issues and/or other issues with existing pipe marker devices, a need exists for a system that enables convenient and cost-effective application of pipe markers to elongate objects such as pipes. The identification system disclosed herein includes a pipe marker and pipe marker standoff that are relatively inexpensive to manufacture and facilitate the efficient installation, removal, and replacement of pipe markers which improve efficiency and/or reduce costs across a wide variety of industrial applications.

### SUMMARY

The present systems and methods disclosed herein overcome many of the shortcomings and limitations of the prior art devices discussed above.

In one aspect, an identification system for an elongate object is disclosed. The identification system includes a panel, a standoff configured to retain the panel at a distance from the elongate object, a connection member configured to couple the standoff to the elongate object, and a spring member configured to engage the panel when the panel is installed on the standoff. The standoff includes a first retention mechanism positioned proximate to a first end of the standoff and a second retention mechanism positioned proximate to a second end of the standoff. The first retention mechanism configured to receive a first edge of the panel, and the second retention mechanism is configured to receive a second edge of the panel.

In some instances, the spring member is provided in the form of a compression spring.

In some instances, the standoff includes a mounting body supported by a base member, and the base member includes two legs configured to provide two points of contact with the elongate object when the identification system is mounted thereon.

In some instances, the connection member surrounds the elongate object and extends through an aperture in the standoff.

In some instances, the standoff includes a first support surface, a second support surface, and a platform. The first support surface, the second support surface, and the platform are all oriented in a common plane.

In some instances, the panel is positioned in the common plane and supported by the first support surface, the second support surface, and the platform when the panel is installed on the standoff.

In some instances, the spring member includes a pair of plastic molded springs coupled to opposing ends of the platform. The plastic molded springs each include a spring distal end positioned above the common plane when the plastic molded springs are in a default position.

In some instances, the first retention mechanism includes a compressible member configured to engage a portion of the panel and apply a friction thereto.

In some instances, the second retention mechanism includes an upright having a protrusion positioned on an interior surface thereof and a flex region that enables the upright to pivot away from the first retention mechanism when the panel is installed. The protrusion engages the panel and keeps the panel retained on the standoff.

In another aspect, a standoff for attaching a panel to an elongate object is disclosed. The standoff includes a mounting body, a base member, a first retention mechanism positioned at a first end of the mounting body and configured to receive a first edge of the panel, and a second retention mechanism positioned at a second end of the mounting body and configured to receive a second end of the panel. The base member includes a post coupled to the mounting body and two legs coupled to the post and extending outwardly therefrom at a downward angle. The legs are configured to contact the elongate object when the standoff is installed.

In some instances, the two legs include a first leg configured to support a winder and a second leg configured to receive a portion of a connection member. The connection member is configured to couple the standoff to the elongate object.

In some instances, the first leg includes two holders and a carveout positioned therebetween. Each holder includes a receiving surface configured to receive a portion of the winder.

In some instances, the second leg includes two receiving holes.

In some instances, the winder includes a receiving slot, the connection member includes a first end and a second end, the first end of the connection member is received by the receiving slot of the winder, and the second end of the connection member is received by the receiving holes of the second leg.

In some instances, the second end of the connection member includes two or more segments configured to be fed through the receiving holes of the second leg.

In some instances, the standoff includes a pawl member positioned on the first leg, and the pawl member inhibits rotation of the winder in a first direction while permitting rotation of the winder in a second direction.

In some instances, the winder includes a body that is received by the receiving surface of the holders, a ratchet wheel positioned at an end of the body and configured to engage the pawl member, and a crank member that can be engaged to turn the winder manually positioned adjacent to the ratchet wheel.

In some instances, the first edge of the panel slides into the first retention mechanism and the second edge of the panel is received in a snap fit by the second retention mechanism.

In some instances, the first edge of the panel is slidingly received by the first retention mechanism and the second edge of the panel is slidingly received by the second retention mechanism.

In a further aspect, a method of installing a pipe marker on an elongate object is disclosed. The method includes coupling a standoff to the elongate object. The standoff includes a first retention mechanism positioned at a first end of the standoff and a second retention mechanism positioned at a second end of the standoff. The method further includes inserting a first edge of a panel into a slot of the first retention mechanism of the standoff, moving the first edge of the panel into the slot until the first edge engages a compressible member of the first retention mechanism, moving a second edge of the panel toward the second retention mechanism, and moving the second edge of the panel toward the second retention mechanism until the second edge is received in a snap fit by the second retention mechanism.

### BRIEF DESCRIPTION OF THE FIGURES

FIG. 1 illustrates a front, top, and right side isometric view of an exemplary identification system for an elongate object;
FIG. 2 illustrates a front, top, and right side isometric view of a first embodiment of a standoff for use with the identification system of FIG. 1;
FIG. 3 illustrates a right side elevational view of the first embodiment of the standoff of FIG. 2;
FIG. 4 illustrates a front, top, and right side isometric view of the first embodiment of the standoff of FIG. 2;
FIG. 5 illustrates a front and right side isometric view of a first embodiment of a connection member of the identification system of FIG. 1;
FIG. 6 illustrates a right side elevational view of the identification system of FIG. 1 using the first embodiment of the standoff of FIG. 2 in combination with the connection member of FIG. 5;
FIG. 7 illustrates a front, top, and right side isometric view of a second embodiment of a standoff for use with the identification system of FIG. 1;
FIG. 8 illustrates a right side elevational view of the second embodiment of the standoff of FIG. 7;
FIG. 9 illustrates a front, top, and right side isometric view of the second embodiment of the standoff of FIG. 7 with a spring member positioned therein;
FIG. 10 illustrates a right side elevational view of the second embodiment of the standoff and spring member of FIG. 9;
FIG. 11 illustrates a right side elevational view of the identification system of FIG. 1 using the second embodiment of the standoff of FIG. 7 in combination with the connection member of FIG. 5;
FIG. 12 illustrates a front, top, and right side isometric view of another exemplary identification system for an elongate object;
FIG. 13 illustrates a top and right side isometric view of a third embodiment of a standoff for use with the identification system of FIG. 12;
FIG. 14 illustrates a right side elevational view of the third embodiment of the standoff of FIG. 13;
FIG. 15 illustrates a front elevational view of a winder of the identification system of FIG. 12;
FIG. 16 illustrates a top, front, and left side isometric view of the winder of FIG. 15;
FIG. 17 illustrates the third embodiment of the standoff of FIG. 13 with a spring member and the winder of FIG. 15 positioned thereon;
FIG. 18 illustrates an enlarged isometric view of a portion of the third embodiment of the standoff of FIG. 13 with the winder of FIG. 15 positioned thereon;
FIG. 19 illustrates a front and right side isometric view of a second embodiment of a connection member of the identification system of FIG. 12;
FIG. 20 illustrates an enlarged view of a portion of the third embodiment of the standoff of FIG. 13 with the winder of FIG. 15 and the second embodiment of the connection member of FIG. 19 positioned thereon;
FIG. 21 illustrates a top, rear, and right side isometric view of the identification system of FIG. 12 with a panel thereof removed;
FIG. 22 illustrates a top, rear, and right side isometric view of the identification system of FIG. 12;
FIG. 23 illustrates a right side elevational view of the identification system of FIG. 12;
FIG. 24 illustrates a right side elevational view of a fourth embodiment of a standoff for use with the identification system of FIG. 1 or the identification system of FIG. 12;
FIG. 25 illustrates a top and right side isometric view of the fourth embodiment of the standoff of FIG. 24;
FIG. 26 illustrates a top, front, and right side isometric view of the fourth embodiment of the standoff of FIG. 24;
FIG. 27 illustrates a flow chart of a method of installing an identification system onto an elongate object; and
FIG. 28 illustrates a flow chart of another method of installing an identification system onto an elongate object.

### DETAILED DESCRIPTION

Before any aspect of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Terms indicating relative position such as "above," "below," "upper," "lower," "rear," "front," and so forth are used for purposes of illustration only, unless otherwise noted and are made with reference to the orientation of the drawings. It should be understood that these terms are not generally meant to indicate a preferred orientation when such an orientation is not inherently or explicitly required.

The present disclosure is directed to an identification system configured to retain a pipe marker or other panel at a distance from a pipe or other object. The identification system may include the panel, one or more standoffs configured to receive and retain the panel, and a mechanism for coupling the one or more standoffs to the pipe. The standoff may include a first retention mechanism configured to receive a first edge the panel and a second retention mechanism configured to receive a second edge of the panel. In some instances, the first retention mechanism may include a compressible member configured to engage the first edge of the panel, and the second retention mechanism may be configured to receive the second edge of the panel in a snap fit or a press fit. However, the first and second retention mechanisms may be provided in other forms. In some instances, the standoff may be configured to accommodate a winder designed to facilitate coupling between the standoff and the pipe.

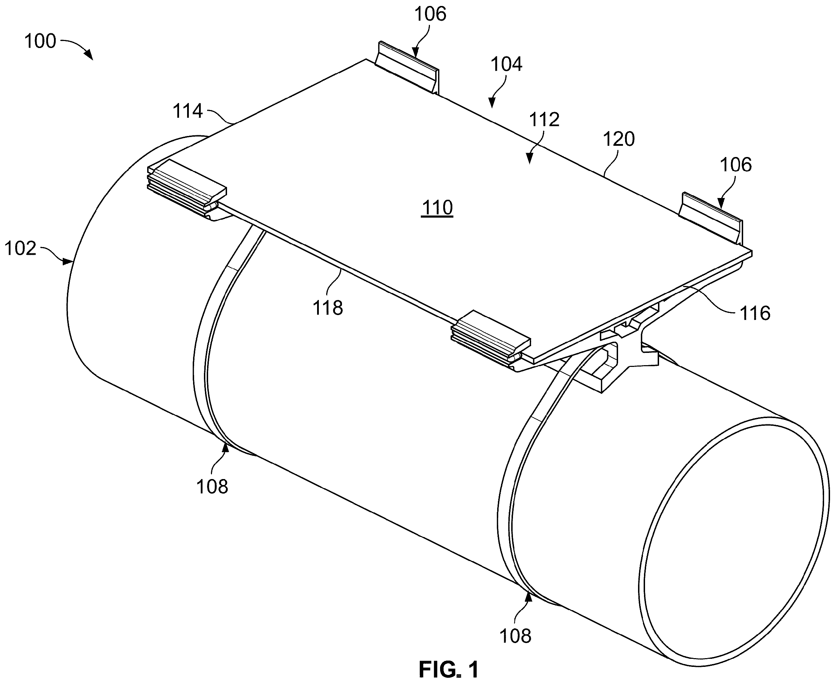

FIG. 1 illustrates an exemplary identification system 100 for displaying information associated with an elongate object such as a pipe. In the example of FIG. 1, the elongate object is provided in the form of a pipe 102 (or a segment thereof). However, in other instances, the identification system 100 may be used with other objects such as ducts, conduits, valves, tanks, hoses, cables, industrial machinery and equipment, and the like.

The identification system 100 may include a pipe marker or panel 104 and one or more standoffs 106 designed to receive the panel 104 and retain the panel 104 at a distance from the pipe 102. Each standoff 106 may have a connection member 108 associated therewith and configured to secure the standoff 106 to the pipe 102. For example, in some instances, the connection member 108 may be provided in the form of a loop or belt configured to encircle the pipe 102 and extend through a portion of the standoff 106, thereby coupling the standoff 106 to the pipe 102. In other instances, the connection member 108 may facilitate coupling between the standoff 106 and the pipe 102 in any suitable manner.

As shown in FIG. 1, the panel 104 may be provided in the form of a substantially planar substrate defining a visible surface 110 upon which pertinent information can be imprinted (e.g., information regarding the pipe 102 such as the pipe's contents, function, etc.). In some instances, the panel 104 may be formed from fiberglass. In other instances, the panel 104 may be formed from other materials such as vinyl, polyester, polyethylene, aluminum, stainless steel, other plastics or metals, and the like depending upon the conditions to which the identification system 100 will be exposed. The visible surface 110 may be arranged to face away from the pipe 102 when the panel 104 is installed such that the visible surface 110 can be conveniently viewed when the identification system 100 is in use.

In some instances, the panel 104 may be imparted with a substantially rectangular shape. In those instances, the panel 104 may be provided in the form of a panel body 112 defined by a first free edge 114, a second free edge 116 opposing the first free edge 114, a first engagement edge 118, and a second engagement edge 120 opposing the first engagement edge 118. The first and second engagement edges 118, 120 may be configured for engagement with the standoff 106. For example, the first and second engagement edges 118, 120 may each be received by a portion of the standoff 106. In other instances, the panel 104 may be imparted with any suitable shape (e.g., circular, oval, trapezoidal, irregular, or other shapes).

The identification system 100 may include any number of standoffs 106. For example, the identification system 100 may include two standoffs 106 positioned proximate or adjacent to the first free edge 114 and the second free edge 116, respectively. In some instances, the standoffs 106 may be formed from a glass-filled nylon or a metal such as stainless steel, aluminum, brass, and the like (e.g., as needed to meet temperature requirements). In other instances, the standoffs 106 may be formed from a plastic such as PVC or nylon, a composite material, and/or other suitable materials. The identification system 100 may include a single standoff 106 or more than two standoffs 106, depending on the circumstances. For example, under circumstances where an abnormally large and/or heavy panel 104 is required, more than two standoffs 106 may be provided to reliably and durably support the panel 104. The standoffs 106 may be arranged in any suitable manner with respect to the panel 104.

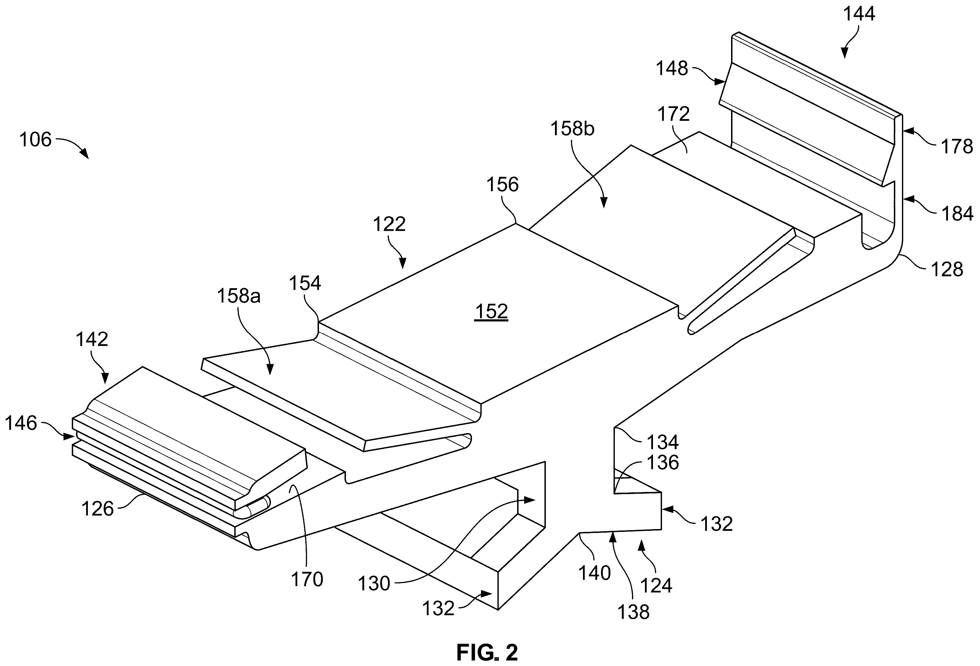

Turning to FIG. 2, the standoff 106 may be provided in the form of a mounting body 122 supported by a base member 124. The mounting body 122 may be defined by a mounting body first end 126 and a mounting body second end 128 opposing the mounting body first end 126. The base member 124 may be positioned in a substantially central location with respect to the mounting body first end 126 and the mounting body second end 128.

In some instances, the base member 124 may include a post 130 oriented substantially perpendicular with respect to the mounting body 122 and two legs 132 coupled to the post 130. For example, the post 130 may be coupled to the mounting body 122 at a post upper end 134, and the legs 132 may be coupled to the post 130 at a post lower end 136 and extend outwardly therefrom. In some instances, the mounting body 122, post 130, and legs 132 may be formed integrally with one another.

The legs 132 may each extend outwardly away from the post 130 at a slight downward angle such that a contact surface 138 is formed between the legs. The contact surface 138 may include an apex 140 where the legs 132 meet. The contact surface 138 may be arranged to contact or rest against the pipe 102 when the identification system 100 is installed. In the example of FIG. 2, the legs 132 may be substantially rectilinear and the contact surface 138 may be substantially V-shaped such that the legs 132 provide two points of contact between the contact surface 138 and the pipe 102. However, in other instances, the legs 132 and contact surface 138 may be imparted with a different geometry. For example, the legs 132 may be substantially curvilinear and the contact surface 138 may be substantially U-shaped. In some instances, the legs 132 may be imparted with a custom shape or structure such that the geometry of the contact surface 138 is configured to mirror the geometry of an external surface of the pipe 102 or other object onto which the identification system 100 is being installed.

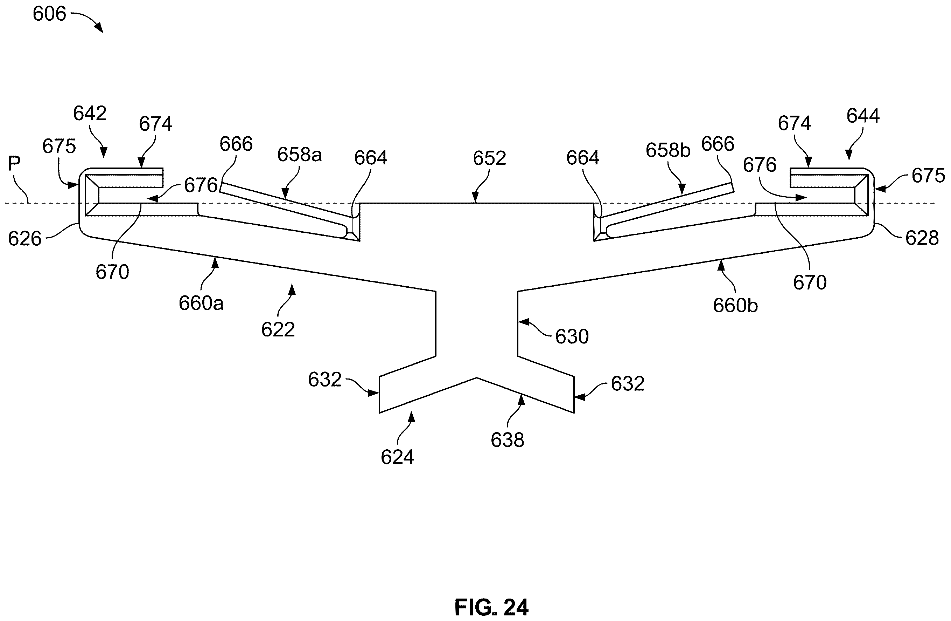

In some instances, the mounting body 122 may include a first retention mechanism 142 positioned at or proximate to the mounting body first end 126 and a second retention mechanism 144 positioned at or proximate to the mounting body second end 128. The first and second retention mechanisms 142, 144 may be provided in substantially the same form (see, e.g., FIGS. 24-26), or the first and second retention mechanisms 142, 144 may be provided in different forms. In the example of FIGS. 1-6, the first retention mechanism 142 may include a compressible member 146 configured to engage an edge of the panel 104, and the second retention mechanism 144 may include a connector 148 configured to receive an edge of the panel 104 in a press fit, snap fit, or other form of closure. For example, in some instances, the compressible member 146 may be provided in the form of a rubber O-ring and the connector 148 may be provided in the form of a clip, clasp, latch, protrusion, or other suitable closure mechanism. In some instances, the first retention mechanism 142 may receive the first engagement edge 118 of the panel 104 and the second retention mechanism 144 may receive the second engagement edge 120 of the panel 104 (e.g., in a snap fit).

The mounting body 122 may include a substantially planar platform 152 positioned between the first retention mechanism 142 and the second retention mechanism 144. For example, the platform 152 may be substantially rectangular in shape and may be defined by a platform first end 154 and a platform second end 156 opposing the platform first end 154.

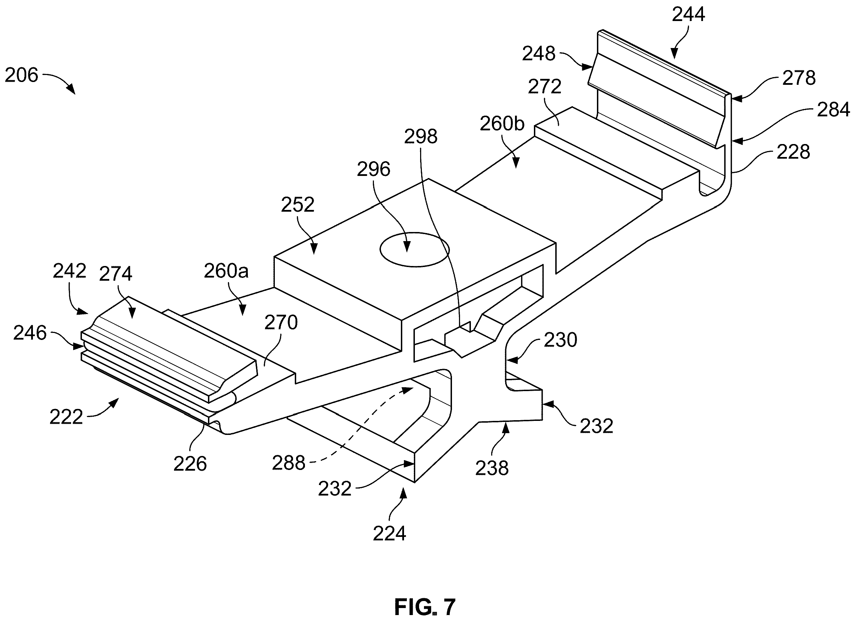

In some instances, the standoff 106 may include one or more spring members 158 designed to apply an upward force, a friction, another force, and/or combinations thereof to the panel 104 when the panel 104 is installed on the standoff 106. In other instances, the spring member 158 may be omitted (e.g., when the application of force to the panel 104 is not required). In the example of FIGS. 2-6, the spring member 158 may be provided in the form of plastic molded springs, and the standoff 106 may include a first spring member 158a positioned at or proximate the platform first end 154 and a second spring member 158b positioned at or proximate to the platform second end 156. However, in other instances, the standoff 106 may include any number of spring member 158 and the spring members 158 may be provided in any suitable form. For example, in some instances, the standoff 106 may include a compression spring in place of the first and second spring members 158a, 158b as described below with reference to FIGS. 7-10.

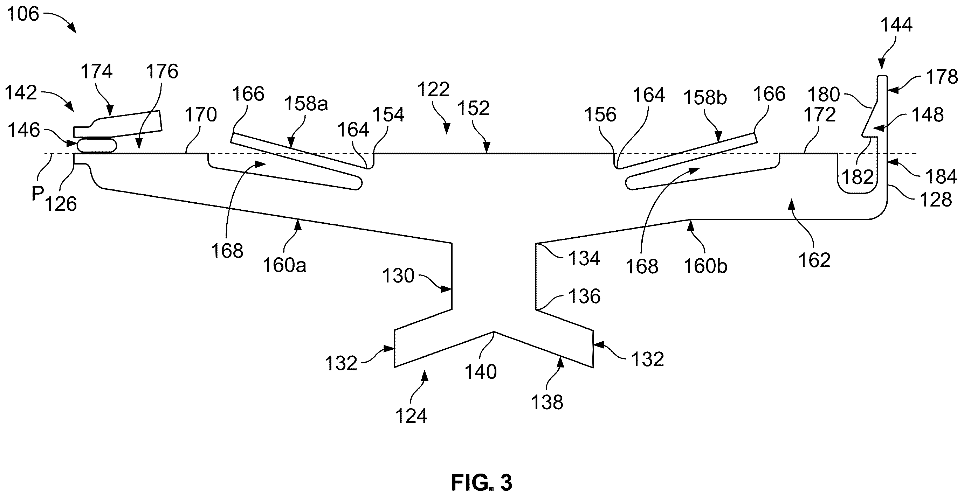

Turning to FIG. 3, the mounting body 122 may include a first arm 160a extending between the platform 152 and the first retention mechanism 142 and a second arm 160b extending between the platform 152 and the second retention mechanism 144. The first and second arms 160a, 160b may each be substantially rectilinear. In some instances, the second arm 160b may include a wedge region 162 having an increased thickness relative to the first arm 160a and configured to impart additional stability to the second retention mechanism 144 (e.g., to withstand the force absorbed by the second arm 160b when the panel 104 is snapped or clipped into the standoff 106). In other instances, the first and second arms 160a, 160b may be provided in substantially the same form, or may be provided in any other suitable form.

The first spring member 158a may be positioned adjacent or proximate to the first arm 160a, and the second spring member 158b may be positioned adjacent or proximate to the second arm 160b. In some instances, the first spring member 158a is disposed above the first arm 160a, and the second spring member 158b is disposed above the second arm 160b. The first and second spring members 158a, 158b may each include a spring proximal end 164 coupled to the mounting body 122 at or proximate to the platform first and second ends 154, 156, respectively. The first and second spring members 158a, 158b may each include a spring distal end 166 extending outwardly away from the platform 152 (e.g., at an upward angle) and toward the mounting body first and second ends 126, 128, respectively. In some instances, the first and second spring members 158a, 158b may each be substantially planar and may be oriented substantially parallel (e.g., parallel or at an upward angle) with respect to the first and second arms 160a, 160b, respectively. Thus, a gap 168 may be positioned between the first arm 160a and the first spring member 158a and between the second arm 160b and the second spring member 158b. In some instances, the first and second spring members 158a, 158b may each be pivotably or flexibly coupled to the mounting body 122 such that each spring member 158 is configured to flex or pivot into the adjacent gap 168 when the panel 104 is installed.

In some instances, the mounting body 122 may include a first support surface 170 proximate or adjacent to the first retention mechanism 142 and a second support surface 172 proximate or adjacent to the second retention mechanism 144. The first support surface 170 and the second support surface 172 may be arranged to support or be positioned adjacent to a portion of the panel 104 when the panel 104 is installed on the standoff 106. In some instances, the first and second support surfaces 170, 172 may be oriented in a common plane P with the platform 152 such that the panel 104 may be positioned in the plane P and adequately supported when received by the first and second retention mechanisms 142, 144.

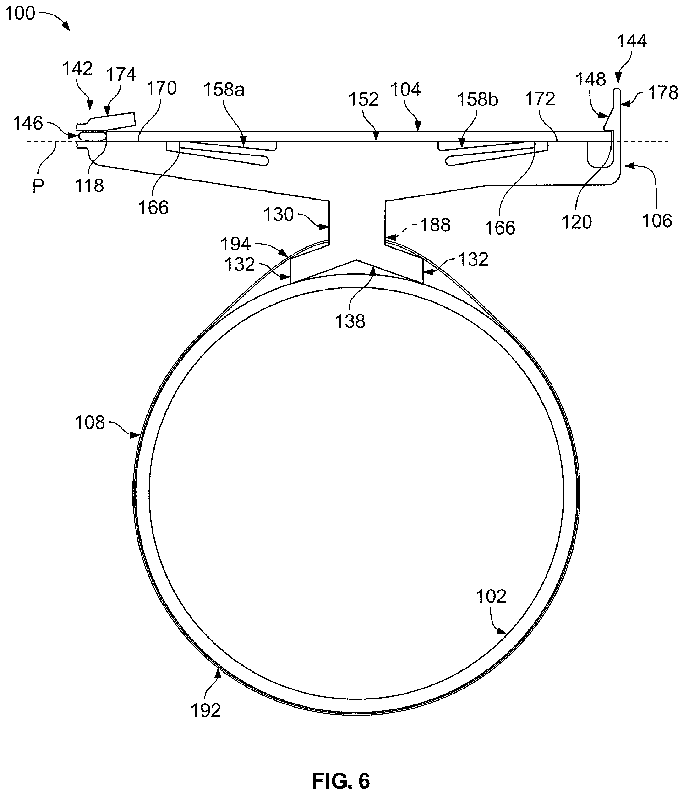

The spring members 158a, 158b may have a default position, as depicted in FIG. 3, where each spring distal end 166 is positioned above the plane P. In this way, the spring members 158a, 158b may be arranged to engage the panel 104 (e.g., by replying a reciprocal or upward force thereto) when the panel 104 is installed on the standoff 106 and each spring distal end 166 is forced below the plane P (see FIG. 6). In some instances, the reciprocal force applied by the spring members 158a, 158b may increase a friction applied to the panel 104, thereby keeping the panel 104 retained on the standoff 406 by preventing or reducing the likelihood of the panel 104 sliding or falling off of the standoff 106 or being unintentionally removed from the standoff 106.

In some instances, the first retention mechanism 142 may be substantially U-shaped and may include the first support surface 170, an upper support member 174 positioned adjacent or proximate to the first support surface 170, and the compressible member 146 positioned between the first support surface 170 and the upper support member 174 at the mounting body first end 126. The upper support member 174 may be oriented substantially parallel (e.g., parallel or at a slight upward or downward angle) with respect to the first support surface 170 such that a slot 176 configured to receive an edge of the panel 104 is positioned between the upper support member 174 and the first support surface 170.

In some instances, the second retention mechanism 144 may be configured to receive an edge of the panel 104 in a snap fit. For example, the second retention mechanism 144 may include an upright 178 positioned at the mounting body second end 128 and the connector 148 provided in the form of a protrusion positioned on an interior surface of the upright 178 (e.g., facing the platform 152) and extending outwardly therefrom (e.g., towards the platform 152). In some instances, the connector 148 may be substantially wedge shaped and may include a sloped surface 180 and an impact surface 182 oriented substantially parallel with respect to the plane P. In other instances, the connector 148 may be provided in any suitable form provided that the connector 148 is configured to retain an edge of the panel 104 when the panel 104 is installed on the standoff 106.

The upright 178 may occupy a default position, as depicted in FIG. 3 (e.g., where the upright 178 is oriented substantially perpendicular with respect to the plane P). In some instances, the upright 178 may include a flex region 184 located beneath the connector 148 configured to enable the upright 178 to flex outwardly away from the remainder of the mounting body 122 when the panel 104 is installed (e.g., in response to an outward or downward force applied to the connector 148). The upright 178 may be imparted with an elastic rigidity such that the upright 178 returns to the default position when the force on the connector 148 is removed.

In some instances, a method of installing the panel 104 on the standoff 106 may include a user positioning a first edge of the panel 104 (e.g., the first engagement edge 118) within the slot 176 of the first retention mechanism 142. The user may then press the first edge of the panel 104 into the compressible member 146 such that the compressible member 146 is compressed and engages the first edge of the panel 104 (e.g., by applying a friction thereto). With the first retention mechanism 142 receiving the first edge of the panel 104, the user may move a second edge of the panel 104 (e.g., the second engagement edge 120) toward the second retention mechanism 144 until the second edge of the panel 104 engages the sloped surface 180 of the connector 148. The user may press the second edge of the panel 104 down until the second edge of the panel 104 is received by the second retention mechanism 144, for example, in a snap fit. In some instances, the second edge of the panel 104 may slide along the sloped surface 180 and cause the upright 178 to pivot outwardly away from the default position. Once the second edge of the panel 104 clears the connector 148, the upright 178 may return to the default position and the impact surface 182 may engage the panel 104 (e.g., by contacting a portion of the visible surface 110 located adjacent to the second edge of the panel 104), thereby retaining the panel 104 in place against the first support surface 170, the platform 152, and/or the second support surface 172.

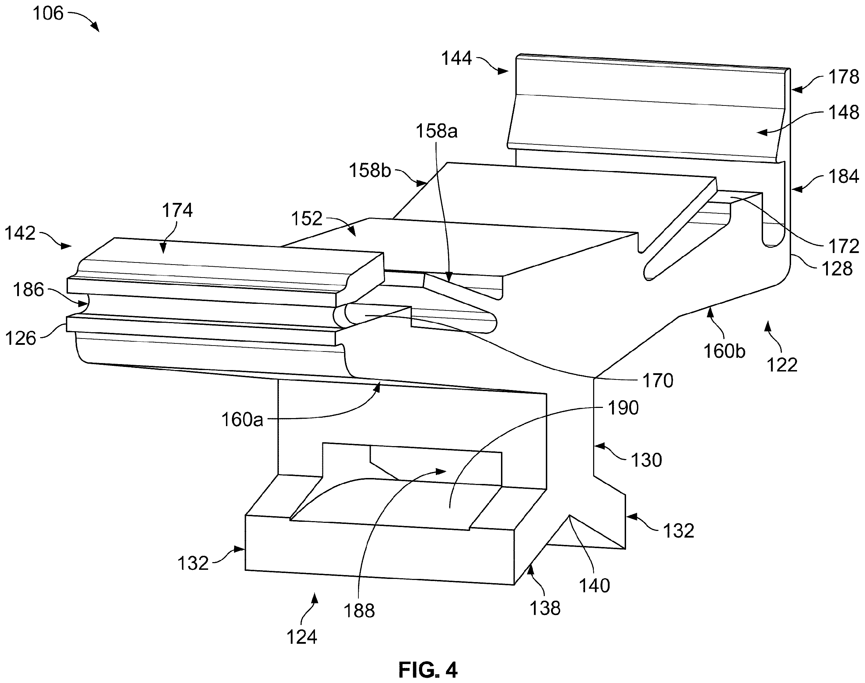

As best shown in FIG. 4, the first retention mechanism 142 may include a recessed seat 186 positioned at the mounting body first end 126 and configured to receive or retain the compressible member 146. For example, in some instances, the compressible member 146 may be provided in the form of a rubber O-ring that can be stretched over the upper support member 174 and manually installed on the recessed seat 186. In other instances, the compressible member 146 may be provided in the form of over molded rubber or may be provided in other forms, provided that the compressible member 146 is configured to engage (e.g., apply a friction to) at least a portion of the panel 104.

In some instances, the standoff 106 may include an aperture 188 extending entirely through a portion of the base member 124 and configured to facilitate coupling the standoff 106 to the pipe 102 or other object (e.g., either before or after installing the panel 104 on the standoff 106 as described above). For example, the connection member 108 surrounding the pipe 102 may extend through the aperture 188, thereby securing the standoff 106 to the pipe 102 (see FIG. 6). The aperture 188 may include an aperture surface 190 against which the connection member 108 may rest or apply a force to when the identification system 100 is in use.

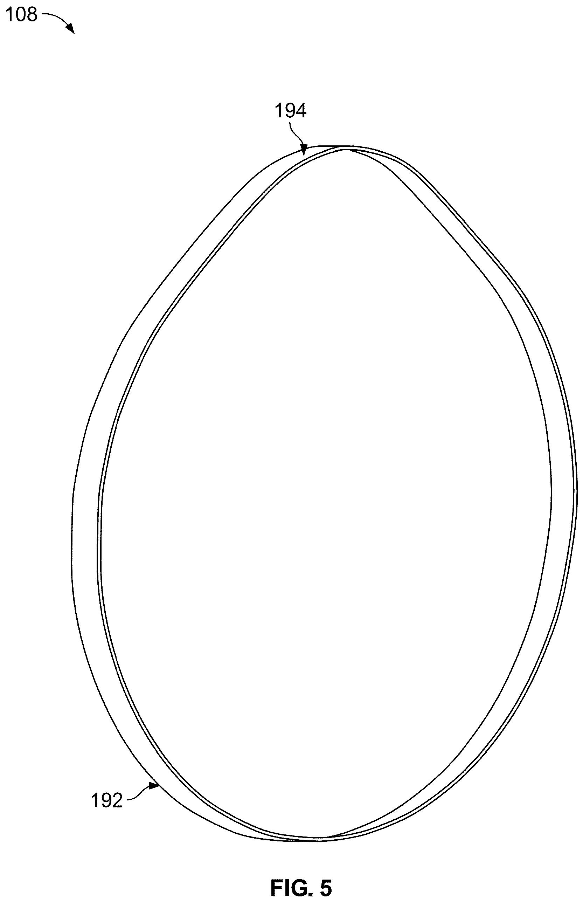

As best shown in FIG. 5, the connection member 108 may be provided in the form of a substantially circular or teardrop-shaped band, strap, or belt including a lower portion 192 arranged to surround the pipe 102 and an upper portion 194 arranged to extend through the aperture 188 and engage the standoff 106, thereby securing or coupling the standoff 106 to the pipe 102. The lower portion 192 may be substantially circular or rounded, and the upper portion 194 may be somewhat pointed, elevated, or extended relative to the general profile of the lower portion in order to accommodate the standoff 106 (e.g., such that the upper portion 194 can fit around the legs 132 to extend through the aperture 188). In some instances, the connection member 108 may be formed from metal. In other instances, the connection member 108 may be formed from a plastic, synthetic material, or any other suitable material.

FIG. 6 depicts the identification system 100 installed on the pipe 102. As shown, the connection member 108 may extend around the pipe 102 and the upper portion 194 of the connection member 108 may extend through the aperture 188, thereby securing the standoff 106 to the pipe 102. In some instances, the connection member 108 may be constructed such that the connection member 108 is sized to prevent or inhibit the standoff 106 from shifting or moving with respect to the pipe 102 while the identification system 100 is installed. Additionally, the two points of contact between the contact surface 138 formed by the legs 132 and the pipe 102 may reduce the ability of the standoff to shift or pivot with respect to the pipe 102 when the identification system 100 is in use.

In some instances, a method of installing the identification system 100 may include installing one or more standoffs 106 on the pipe 102 using one or more connection members 108 and subsequently installing the panel 104 on the one or more standoffs 106. For example, in instances where two standoffs 106 are provided to retain the panel 104, the two standoffs 106 may first be installed on the pipe 102 using two connection members 108. The standoffs 106 may be spaced apart along the pipe 102 such that one standoff 106 is arranged to be positioned adjacent or proximate to the first free edge 114 of the panel 104 and the other standoff 106 is arranged to be positioned adjacent or proximate to the second free edge 116 of the panel 104 (see FIG. 1) when the panel 104 is installed.

With the standoffs 106 in place, the panel 104 may be installed by first positioning a first edge of the panel 104 (e.g., the first engagement edge 118) within the first retention mechanism 142 and subsequently positioning the second edge of the panel 104 (e.g., the second engagement edge 120) within the second retention mechanism 144. For example, the first edge of the panel 104 may be positioned against the compressible member 146 such that the compressible member 146 is compressed and engages the first edge of the panel 104 and the second edge of the panel 104 may be subsequently pressed toward the second retention mechanism 144 until the second edge of the panel 104 is received by the second retention mechanism 144, for example, in a snap fit (e.g., via the connector 148). In some instances, the panel 104 may be removed or replaced by pressing the uprights 178 of the second retention mechanisms 144 away from the panel 104 such that the connector 148 no longer engages the panel 104 and the panel 104 can be lifted away from the standoff 106 and out of engagement with the first retention mechanism 142.

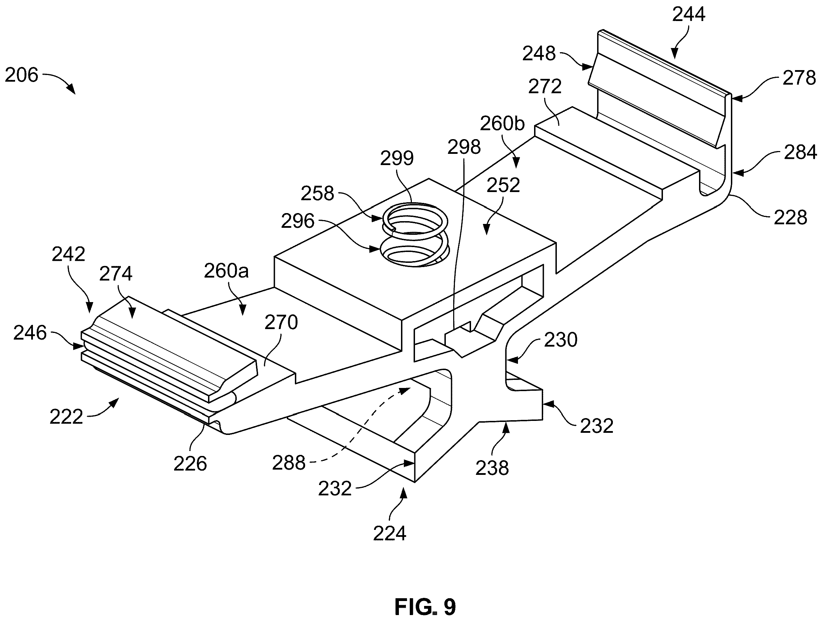

Turning to FIG. 7, a second embodiment of a standoff 206 is depicted which can be used with the identification system 100 in lieu of the standoff 106. The standoff 206 may be substantially similar to the standoff 106, and components of the standoffs 106, 206 with like names and reference numbers may be substantially similar in form and function. The standoff 206 may function in substantially the same manner as the standoff 106. However, the standoff 206 may include a spring member 258 (see, e.g., FIG. 9) that differs from the spring members 158 of the standoff 106. For example, the standoff 206 may utilize one or more spring members 258 provided in the form of a compression spring, whereas the spring members 158 may be provided in the form of a plastic molded spring. However, the one or more spring members 258 may serve a similar purpose to the spring members 158 in that the spring members 258 may be configured to keep the panel 104 retained on the standoff 206 by preventing or inhibiting the panel 104 from sliding or falling off of the standoff 206 or being unintentionally removed from the standoff 206 by applying a force (e.g., an upward force or a friction) to the panel 104 when the panel 104 is installed on the standoff 206.

The standoff 206 may be provided in the form of a mounting body 222 supported by a base member 224. In some instances, the base member 224 may include a post 230 with two legs 232 positioned at an end thereof and extending outwardly therefrom. A contact surface 238 formed by the legs 232 may be substantially V-shaped such that the contact surface provides two points of contact with the pipe 102 when the standoff 206 is installed. In some instances, the mounting body 222 may include a first retention mechanism 242 positioned at or adjacent to a mounting body first end 226, a second retention mechanism 244 positioned at or adjacent to a mounting body second end 228, a platform 252 positioned between the first and second retention mechanisms 242, 244, a first arm 260a extending between the platform 252 and the first retention mechanism 242, and a second arm 260b extending between the platform 252 and the second retention mechanism 244. In other instances, the mounting body 222 and the base member 224 may be provided in other forms.

In some instances, the first retention mechanism 242 may include a first support surface 270, an upper support member 274, and a compressible member 246 positioned therebetween and located proximate or adjacent to the mounting body first end 226. The second retention mechanism 244 may include an upright 278 including a connector 248 positioned on an interior surface of the upright 278 and extending inwardly therefrom and a flex region 284 that enables the upright 278 to flex away from the panel 104 when the panel 104 is installed. In other instances, the first and second retention mechanisms 242, 244 may be provided in other forms. In some instances, the panel 104 may be installed on the standoff 206 in substantially the same manner as described above with reference to the standoff 106. For example, the first retention mechanism 242 may receive a first edge of the panel 104 (e.g., the first engagement edge 118) and the compressible member 246 may apply a friction thereto, and the second retention mechanism 244 may be configured to receive a second edge of the panel 104 (e.g., the second engagement edge 120), for example, in a snap fit.

Instead of plastic molded springs coupled to the mounting body 222 (e.g., coupled to the platform 252), the standoff 206 may include one or more spring receptacles 296 configured to receive one or more spring members 258. In the example of FIGS. 7-10, the standoff 206 includes one spring receptacle 296 for receiving one spring member 258; however, in other instances, more than one spring receptacle 296 and more than one spring member 258 may be provided (e.g., in instances where the application of additional friction to the panel 104 is required). In some instances, the spring receptacle 296 may be provided in the form of a cylindrical opening positioned in the platform 252 and extending downwardly therefrom. However, in other instances, the one or more spring receptacles 296 may be positioned in any suitable location (e.g., on the first support surface 270, the second support surface 272, or other portions of the standoff 206).

In some instances, the standoff 206 may include an aperture 288 positioned on the base member 224 (e.g., extending entirely through the post 230) for accommodating the connection member 108 and facilitating coupling of the standoff 206 to the pipe 102. The standoff 206 may be installed on the pipe 102 or another object using the connection member 108 in substantially the same manner as described above with respect to the standoff 106.

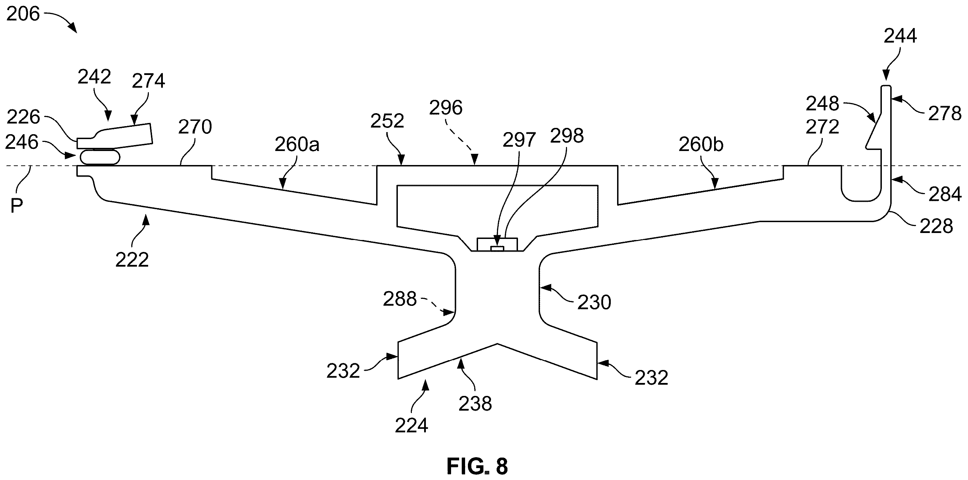

As best shown in FIG. 8, the platform 252, first support surface 270, and second support surface 272 may be positioned in the same plane P and configured to support the panel 104 when the panel 104 is installed on the standoff 206. In some instances, the standoff 206 may include a viewing window 298 in communication with the spring receptacle 296 such that a viewer can, for example, observe whether the spring member 258 is positioned within the spring receptacle 296. For example, the viewing window 298 may be provided in the form of an opening extending partially or entirely through the mounting body 222 (e.g., oriented substantially perpendicular with respect to the spring receptacle 296). In other instances, the viewing window 298 may be omitted.

In some instances, the standoff 206 may include a spring retention member 297 positioned within the spring receptacle 296. The spring retention member 297 may be configured to engage or receive a portion of the spring member 258 and maintain the spring member 258 in a substantially fixed position within the spring receptacle 296. For example, the spring retention member 297 may restrict or prevent the spring member 258 from being ejected from or accidentally pulled out of the spring receptacle 296. In some instances, the spring retention member 297 may be formed within the spring receptacle 296 via molding. For example, the viewing window 298 may facilitate molding of the spring retention member 297 by providing access to an interior of the spring receptacle 296. In other instances, the spring retention member 297 may be formed in any suitable manner (e.g., the spring retention member 297 may be formed integrally with the standoff 206).

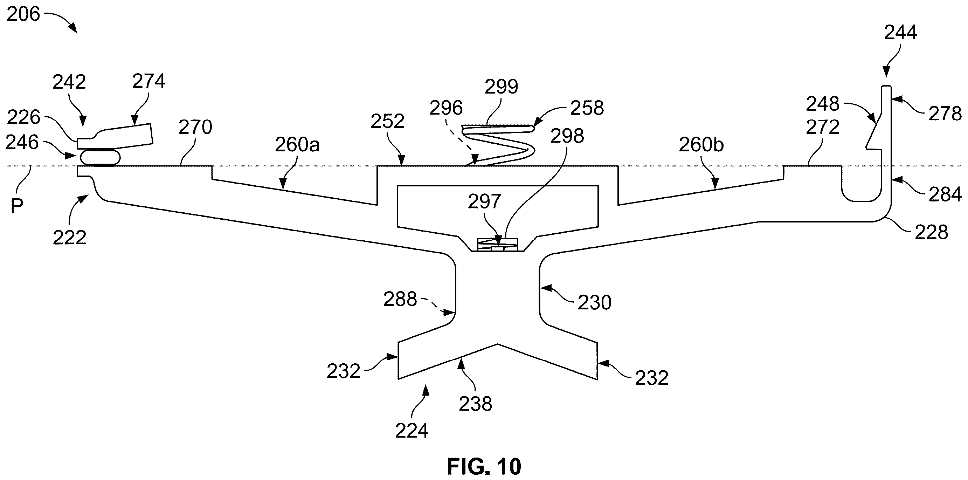

FIG. 9 depicts the standoff 206 with the spring member 258 positioned within the spring receptacle 296. As shown, the spring member 258 may be provided in the form of a compression spring (e.g., a metal compression spring) configured to occupy a default position when the panel 104 is not installed on the standoff 206. As best shown in FIG. 10, the default position, a free end 299 of the spring member 258 may extend beyond the platform 252 such that the free end 299 is positioned above the plane P and arranged to engage the panel 104 when the panel 104 is installed. For example, installation of the panel 104 may push the free end 299 down as the panel 104 moves toward the platform 252 such that the spring member 258 moves from the default position to a compressed position.

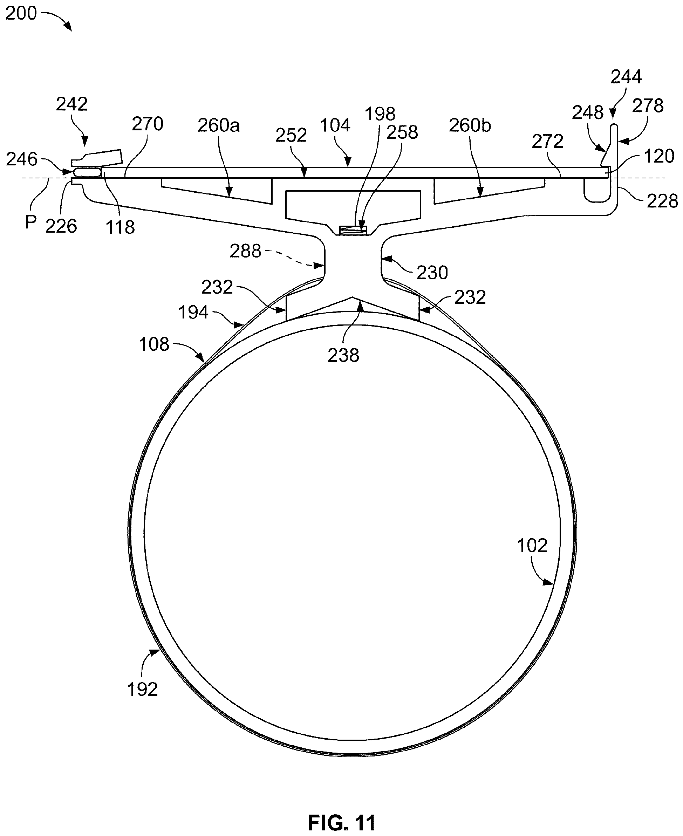

As shown in FIG. 11, when the panel 104 is installed on the standoff 206, the panel 104 may be oriented in the plane P and the spring member 258 may be in the compressed position. In the compressed position, the spring member 258 may apply an upward force to the panel 104, thereby increasing a friction applied to the panel 104 and/or stabilizing the panel 104 with respect to the first and second retention mechanisms 242, 244.

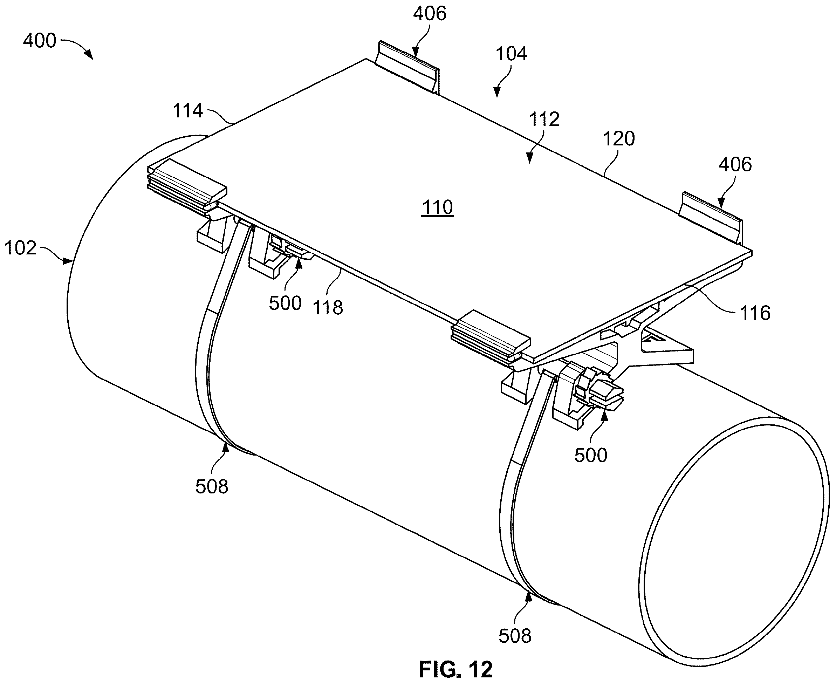

FIG. 12 depicts another exemplary identification system 400, which may be substantially similar to the identification system 100. For example, components of the identification system 400 and the identification system 100 with like names and reference numbers may be substantially similar in form and function.

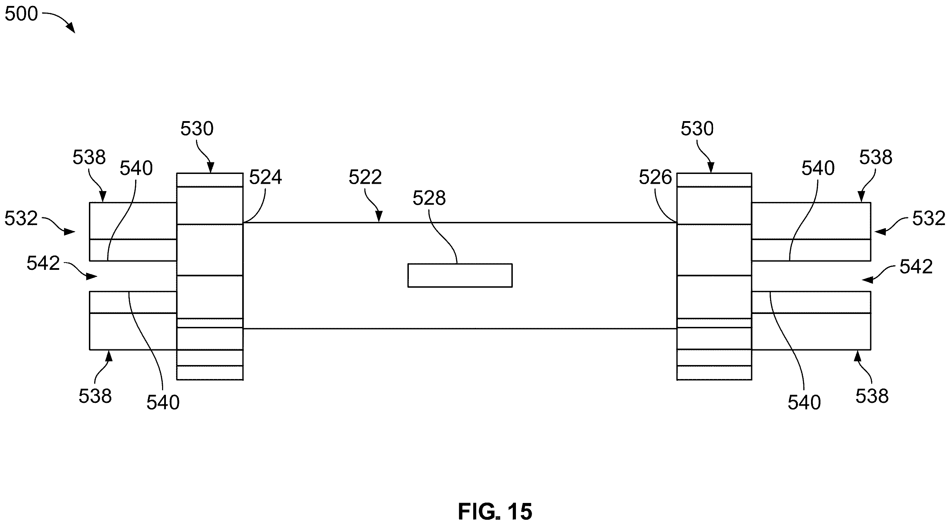

The identification system 400 may include one or more standoffs 406 configured to retain the panel 104 at a distance from the pipe 102. The identification system 400 may differ from the identification system 100 in that a winder 500 may be associated with each standoff 406 and may facilitate coupling of the standoff 406 to the pipe 102, as described in detail below with reference to FIGS. 15-20.

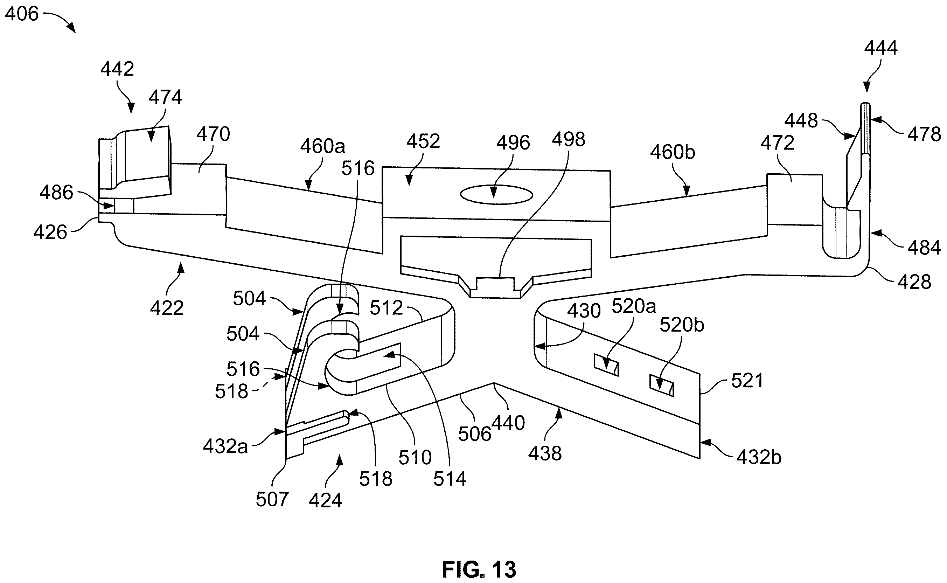

Turning to FIG. 13, the standoff 406 may include a mounting body 422 supported by a base member 424. The mounting body 422 may be substantially similar to the mounting body 122 and/or the mounting body 222. For example, the mounting body 422 may include a first retention mechanism 442 positioned proximate or adjacent to a mounting body first end 426 and a second retention mechanism 444 positioned proximate or adjacent to a mounting body second end 428. The mounting body 422 may include a platform 452 positioned between the first and second retention mechanisms 442, 444, a first arm 460a extending between the platform 452 and the first retention mechanism 442, and a second arm 460b extending between the platform 452 and the second retention mechanism 444.

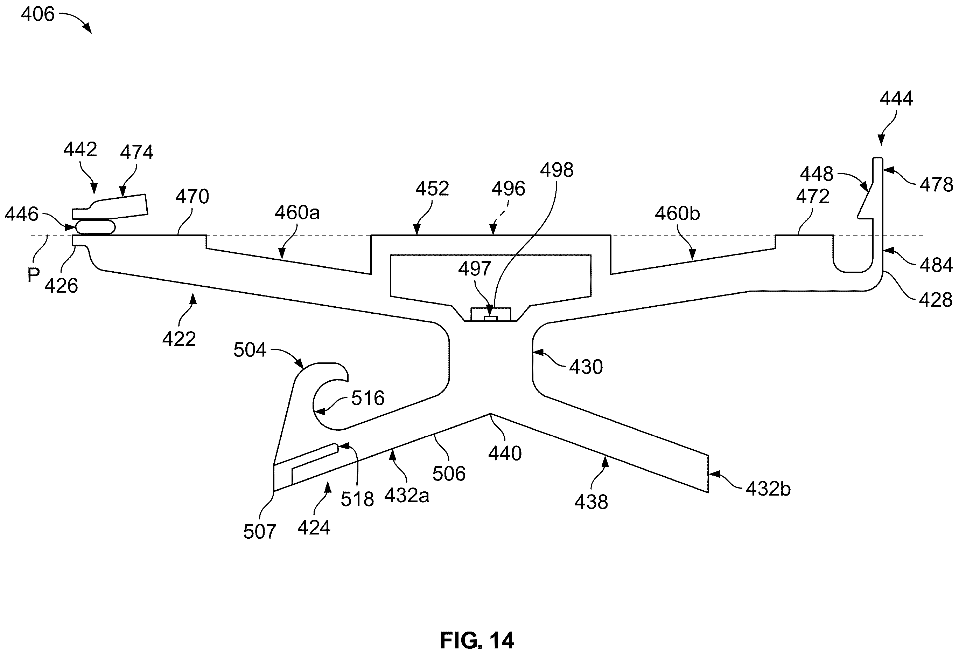

In some instances, the first retention mechanism 442 may include a first support surface 470, upper support member 474, and a recessed seat 486 configured to receive a compressible member 446 (see, e.g., FIG. 14) for applying a force (e.g., a friction) to the panel 104. In some instances, the second retention mechanism 444 may include an upright 478 having a flex region 484 and a connector 448 positioned on an interior surface of the upright 478 and configured to receive an edge of the panel 104, for example, in a snap fit. In other instances, the first and second retention mechanisms 442, 444 may be provided in other forms.

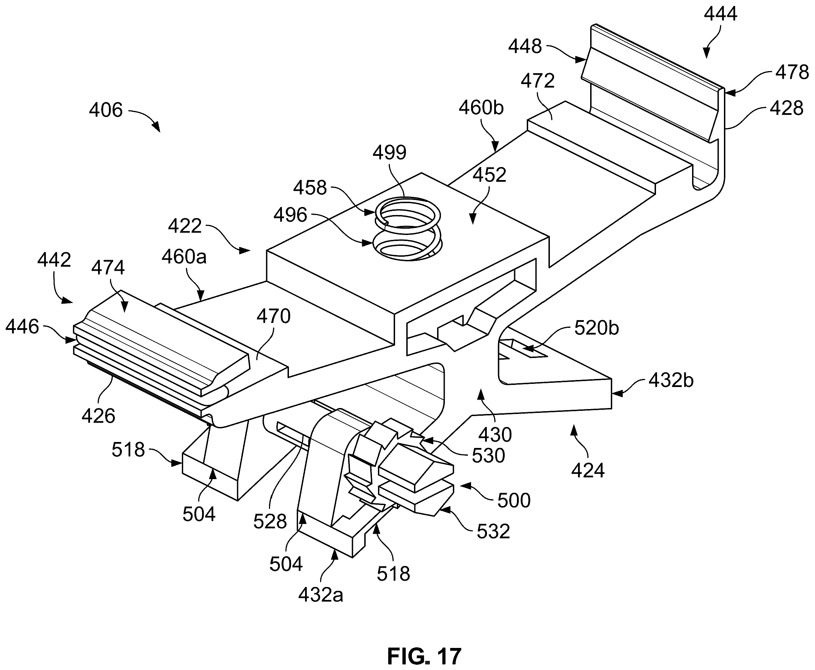

The standoff 406 may include one or more spring members 458 (see, e.g., FIG. 17) configured to keep the panel 104 retained on the standoff 406 by preventing or inhibiting the panel 104 from sliding or falling off of the standoff 406 or being unintentionally removed from the standoff 406. For example, the spring members 458 may be provided in the form of plastic molded springs (e.g., similar to the first and second spring members 158a, 158b), compression springs (e.g., similar to the spring member 258), or may be provided in other forms. In the example of FIGS. 13-21, the standoff 406 includes a spring receptacle 496 having the same or similar function, location, and shape as described above with reference to the spring receptacle 296 of the standoff 206. The spring receptacle 496 may be positioned on the platform 452 and configured to receive the spring member 458 provided in the form of a compression spring. In some instances, the standoff 406 may include a viewing window 498 in communication with the spring receptacle 496 and a spring retention member 497 positioned within the spring receptacle 496. For example, in some instances, the spring retention member 497 may be formed via molding and the viewing window 498 may facilitate molding of the spring retention member 497 by providing access to an interior of the spring receptacle 496. In other instances, the spring receptacle 496, spring members 458, spring retention member 497, and/or viewing window 498 may be omitted.

The base member 424 may be provided in the form of a post 430 coupled to the mounting body 422 and two legs 432 coupled to the post 430 and extending outwardly therefrom. The legs 432 may form a contact surface 438 arranged to contact or be positioned adjacent to the pipe 102 when the standoff 406 is installed on or coupled to the pipe 102. In some instances, the contact surface 438 may be substantially V-shaped and may include an apex 440. In other instances, the contact surface 438 may be imparted with any suitable shape.

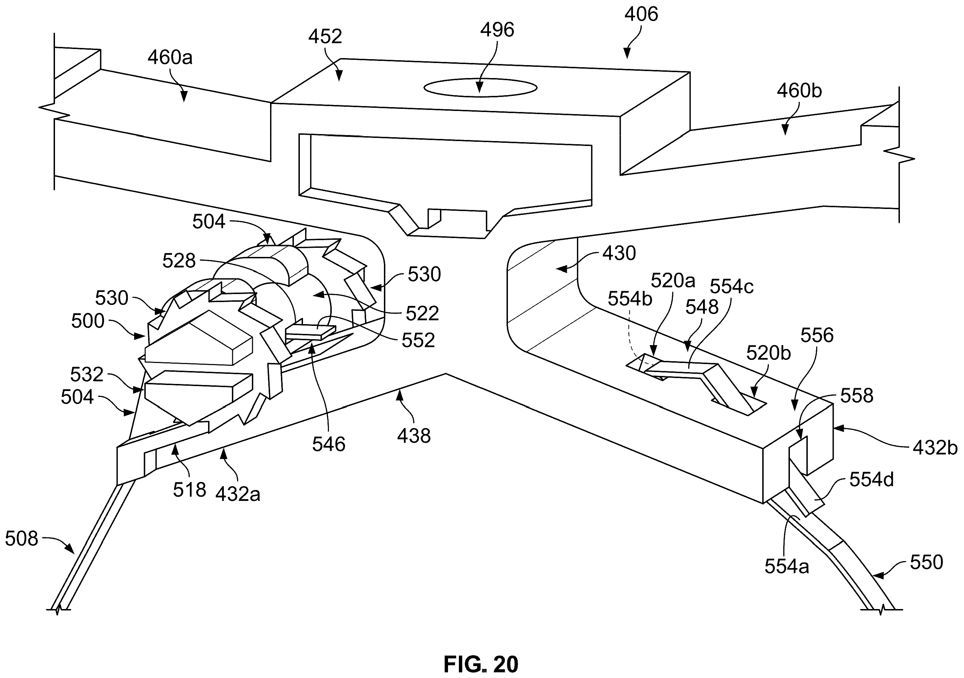

The legs 432 of the standoff 406 may differ from the legs 132, 232 of the standoffs 106, 206, respectively, such that the base member 424 is configured to accommodate the winder 500 and another exemplary connection member 508 when the identification system 400 is assembled. For example, in some instances, the base member 424 may include a first leg 432a configured to support or retain the winder 500 and a second leg 432b configured to receive an end of the connection member 508 (see, e.g., FIG. 20).

In some instances, the first leg 432a may be include one or more holders 504 configured to support or retain the winder 500. For example, the first leg 432a may extend between a first leg proximal end 506 coupled to the post 430 and a first leg distal end 507. Additionally, the first leg 432a may be defined by a first lateral edge 510 and a second lateral edge 512. The first leg 432a may include a substantially rectilinear carveout 514 positioned at the first leg distal end 507 and extending at least partially toward the first leg proximal end 506. In some instances, the first leg 432a may include two holders 504 positioned on opposing sides of the carveout 514 (e.g., positioned proximate or adjacent to the first lateral edge 510 and the second lateral edge 512). The holders 504 may be formed integrally with the first leg 432a or may be coupled to the first leg 432a and extend upwardly therefrom.

In some instances, the holders 504 may be imparted with a C-shape or a shape resembling that of a cresting wave such that the holders 504 each include a rounded or semicircular receiving surface 516 configured to receive a portion of the winder 500 (see FIG. 20). For example, the receiving surface 516 of each holder 504 may curve inwardly toward the post 430. In some instances, the first leg 432a may also include one or more pawl members 518. For example, the first leg 432a may include two pawl members positioned on the first leg 432a and extending outwardly from each of the first and second lateral edges 510, 512. In other words, the first leg 432a may include two pawl members 518 positioned on each of the holders 504 and extending outwardly therefrom. The pawl members 518 may be configured to engage the winder 500. In the example of FIG. 13, the pawl members 518 may be positioned proximate to the first leg distal end 507. However, in other instances, the pawl members 518 may be positioned in other locations on the first leg 432a (e.g., proximate to the first leg proximal end 506 or between the first leg proximal end 506 and the first leg distal end 507). In some instances, the pawl members 518 may be positioned proximate to the first leg proximal end 506 to permit the winder 500 to rotate in a first direction (e.g., counterclockwise, see FIG. 20). In other instances, the pawl members 518 may be positioned proximate to the first leg distal end 507 to permit the winder to rotate in a second direction (e.g., clockwise). In still other instances, the pawl members 518 may be omitted.

In some instances, the second leg 432b may include one or more receiving holes 520 arranged to securely and/or releasably receive an end of the connection member 508. In some instances, the second leg 432b may include two receiving holes 520 provided in the form of substantially rectangular openings extending entirely through the second leg 432b. For example, a first receiving hole 520a may be positioned proximate to a second leg distal end 521, and a second receiving hole 520b may be positioned between the first receiving hole 520a and the post 430. In other instances, the second leg 432b may include any number of receiving holes 520, and the receiving holes 520 may be positioned in any suitable arrangement.

As best shown in FIG. 14, the platform 452, the first support surface 470, and a second support surface 472 positioned adjacent or proximate to the second retention mechanism 444 may be positioned in the same plane P and configured to support the panel 104 when the panel 104 is installed on the standoff 406. In instances where the spring member 458 is provided in the form of a compression spring, the standoff 406 may include the viewing window 498 in communication with the spring receptacle 496 such that a viewer can, for example, observe whether the spring member 458 is positioned within the spring receptacle 496. In other instances, the viewing window 498 may be omitted.

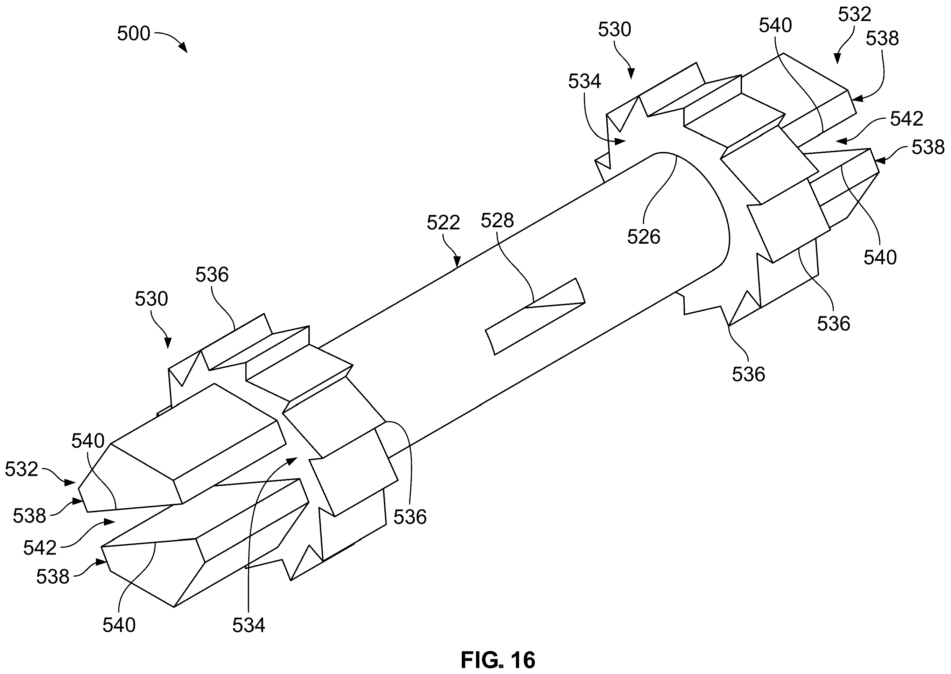

Turning to FIGS. 15 and 16, the winder 500 may be provided in the form of a substantially tubular winder body 522 defined by a winder first end 524 and a winder second end 526 opposing the winder first end 524. In some instances, a receiving slot 528 may be provided in the form of a substantially rectilinear opening extending entirely through the winder body 522. For example, the receiving slot 528 may be positioned in a substantially central location with respect to the winder first and second ends 524, 526. In other instances, the receiving slot 528 may be imparted with any suitable shape and may be positioned in other locations along the winder body 522.

In some instances, the winder 500 may include two ratchet wheels 530 positioned at the winder first and second ends 524, 526 and two crank members 532 positioned adjacent or proximate to the ratchet wheels 530 such that the crank members 532 are positioned between the ratchet wheels 530 and the winder body 522. As best shown in FIG. 16, the ratchet wheels 530 may each be provided in the form of a substantially cylindrical ratchet body 534 with a plurality of teeth 536 circumscribing an outer perimeter thereof. Additionally, in some instances, the crank members 532 may each be provided in the form of a pair of rectilinear protrusions 538 positioned on the ratchet body 534 and extending outwardly therefrom. The rectilinear protrusions 538 may each include an engagement surface 540, and the engagement surfaces 540 of each respective pair of protrusions 538 may define a substantially rectilinear engagement channel 542. For example, a user may operate the crank members 532 to turn the winder 500 by inserting a tool into the engagement channel 542 and turning the tool. In other instances, the ratchet wheels 530 and/or the crank members 532 may be provided in another suitable form or may be omitted.

FIG. 17 depicts the standoff 406 with the winder 500 retained on the first leg 432a by the holders 504 and with the spring member 458 positioned within the spring receptacle 496. The spring member 458 may be constructed such that a free end 499 of the spring member 458 extends beyond the platform 452 (e.g., above the plane P) when the spring member 458 is positioned within the spring receptacle 496.

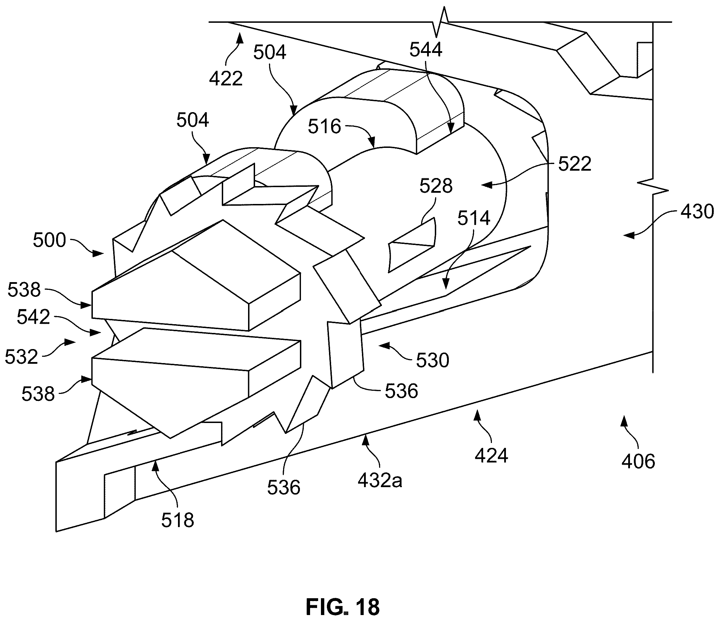

As best shown in FIG. 18, the holders 504 may be configured to receive the winder body 522 when the winder 500 is installed on the standoff 406. For example, the receiving surface 516 of the holders 504 may be imparted with a geometry that mirrors the geometry of the winder body 522. In some instances, each of the holders 504 may terminate at a pointed end 544. The pointed end 544 may enable the holders 504 to receive the winder body 522 in a press fit or snap fit, thereby securing the winder 500 with respect to the standoff 406 when the identification system 400 is in use. In other instances, the pointed end 544 may be omitted and the base member 424 of the standoff 406 may be configured to receive and/or retain the winder 500 in any suitable manner. In some instances, when the winder 500 is installed on the standoff 406, the receiving slot 528 may be positioned adjacent or proximate to the carveout 514 of the first leg 432a.

In some instances, the teeth 536 of the ratchet wheels 530 may engage the associated pawl member 518 such that the ratchet wheel 530 prevents or inhibits the winder 500 from rotating in one direction while enabling the winder 500 to rotate in the other direction. In other words, the ratchet wheel 530 and pawl member 518 may function together as a one way ratchet enabling rotation of the winder 500 only in one direction. In some instances (e.g., in the example of FIG. 18), the pawl members 518 may inhibit rotation of the winder 500 in a clockwise direction. However, in other instances, the pawl members 518 and winder 500 may be configured such that the pawl members 518 inhibit rotation of the winder 500 in a counterclockwise direction. In this way, when the identification system 400 is assembled and an end of the connection member 508 is received within the receiving slot 528, the pawl members 518 may prevent unintentional loosening of the connection member 508, thereby ensuring that the identification system 400 remains secured to the pipe 102 or other object (see FIG. 12).

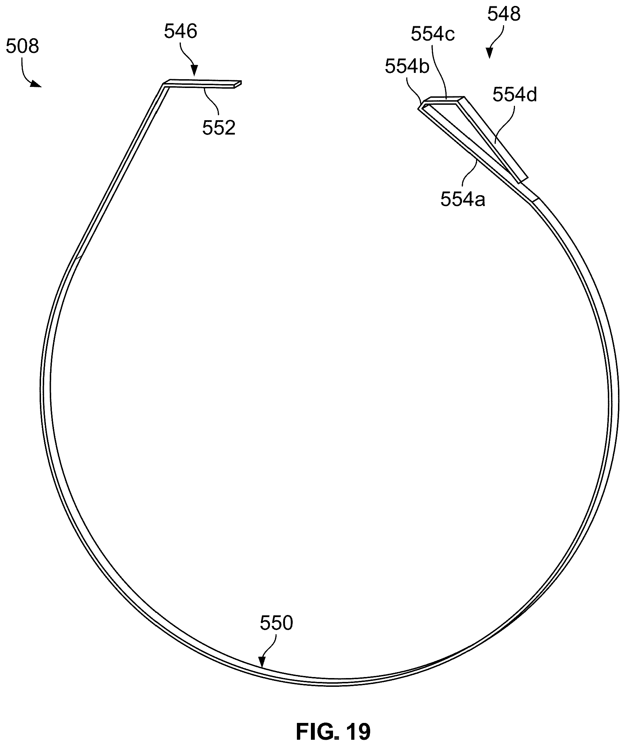

Turning to FIG. 19, in some instances, the connection member 508 may include a first connection end 546, a second connection end 548 opposing the first connection end 546, and a rounded connection member body 550 extending between the first and second connection ends 546, 548. The first connection end 546 may be configured to be received by or coupled to the winder 500, and the second connection end 548 may be configured to be received by or coupled to the second leg 432b. In some instances, the connection member 508 may be formed from a somewhat rigid material (e.g., a metal or plastic) such that the connection member 508 is biased towards maintaining its shape. In other instances, the connection member 508 may be formed from other materials.

In some instances, the first connection end 546 may include a substantially planar or rectilinear insert portion 552 configured to be received by the receiving slot 528 of the winder 500. The second connection end 548 may include one or more segments 554 configured to be fed through and received by the receiving holes 520 of the second leg 432b. For example, in some instances, the second connection end may include a first segment 554a, second segment 554b, third segment 554c, and fourth segment 554d. The segments 554a-554d may be coupled together in series and each segment 554 may be oriented at an angle with respect to the one or more segments 554 adjacent thereto. In other instances, however, the second connection end 548 may include any number of segments 554 arranged in any suitable configuration.

As best shown in FIG. 20, the connection member 508 may be coupled to the standoff 406 by inserting the insert portion 552 of the first connection end 546 into the receiving slot 528 in the winder body 522 and inserting the segments 554a-554d of the second connection end 548 into the receiving holes 520 of the second leg 432b. For example, in some instances, the second connection end 548 may be coupled to the second leg 432b by inserting the fourth segment 554d first into the first receiving hole 520a from below (e.g., via the contact surface 438), then into the second receiving hole 520b from above (e.g., via an upper surface 556 of the second leg 432b).

Thus, the first segment 554a may be positioned proximate or adjacent to the contact surface 438, the second segment 554b may be at least partially disposed within the first receiving hole 520a, the third segment 554c may be positioned proximate or adjacent to the upper surface 556 and may extend at least partially between the first and second receiving holes 520a, 520b, and the fourth segment 554d may extend through the second receiving hole 520b. In some instances, the second leg 432b may include a substantially rectilinear recess 558 in communication with the second receiving hole 520b and configured to accommodate at least a portion of the fourth segment 520d when the connection member 508 is coupled to the standoff 406. In other instances, however, the second connection end 548 may be coupled to the standoff 406 (e.g., to the second leg 432b) in any suitable manner.

Additionally, in some instances, the winder 500 may be configured to tighten the connection member 508 with respect to the elongate object (e.g., the pipe 102). For example, with the first connection end 546 of the connection member 508 received within the receiving slot 528, the winder 500 may be rotated such that at least a portion of the connection member body 550 is wound about the winder body 522, thereby removing slack in the connection member 508. In some instances, the winder 500 may be rotated to wind the connection member body 550 about the winder body 522 until the connection member body 550 engages or is in contact with the elongate object, such as the pipe 102. In other instances, the winder 500 may be provided in other forms and may facilitate a connection between the connection member 508 and the elongate object in any suitable manner.

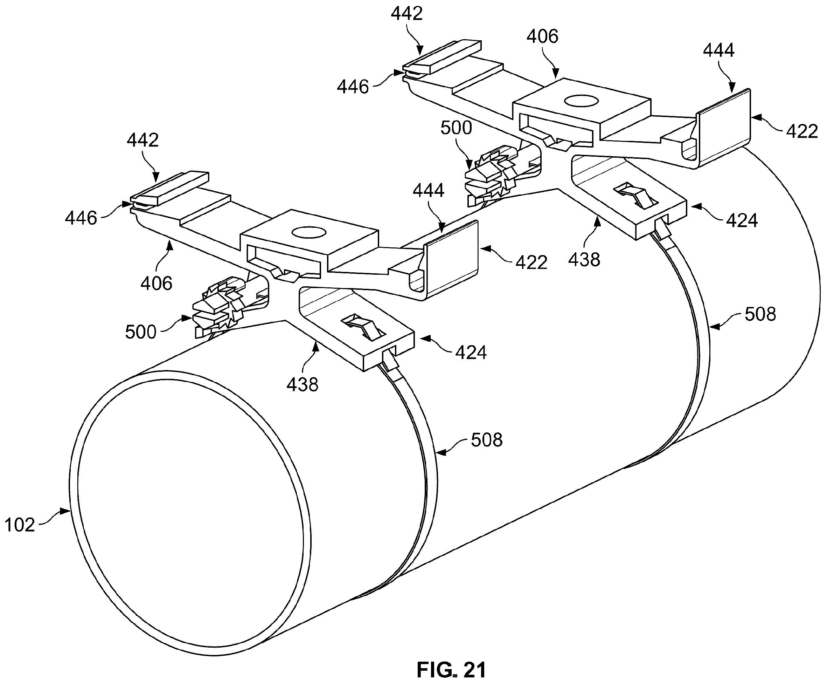

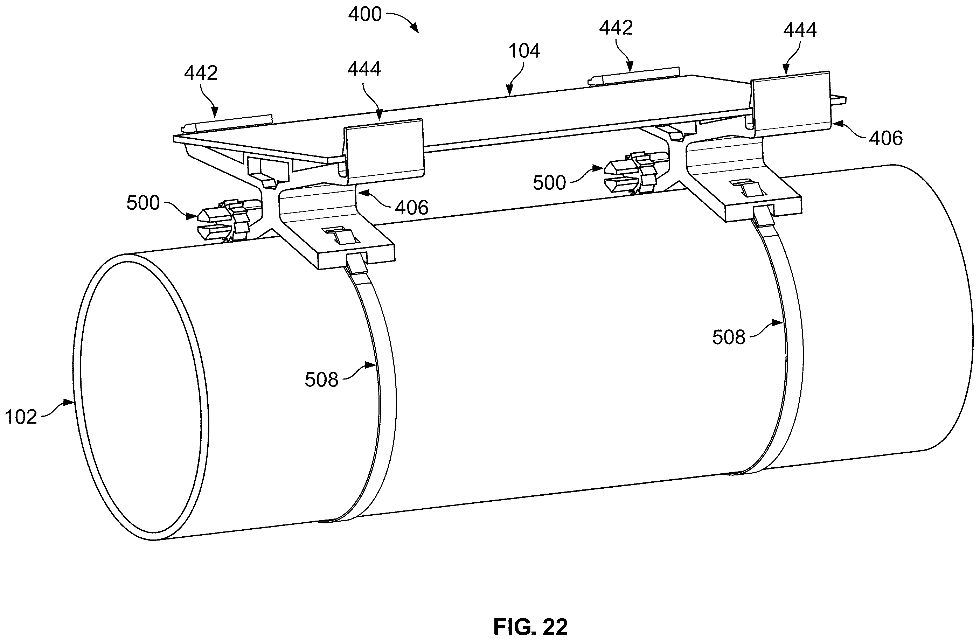

Turning to FIGS. 21 and 22, in some instances, a method of installing the identification system 400 on the pipe 102 or another object may include first installing one or more standoffs 406 on the pipe 102 using one or more connection members 508. For example, the identification system 400 may include two standoffs 406 coupled to the pipe 102 using two connection members 508. In some instances, the standoffs 406 may be spaced apart from one another along the pipe 102 such that one standoff 406 is arranged to be located adjacent or proximate to the first free edge 114 of the panel 104 and the other standoff 406 is arranged to be located adjacent or proximate to the second free edge 116 (see FIG. 1).

The standoffs 406 may be installed on the pipe 102 such that the first retention mechanisms 442 and the second retention mechanisms 444 of each standoff 406 are substantially aligned and positioned to receive an edge of the panel 104. With the standoffs 406 installed on the pipe 102, the panel 104 may be installed on the standoffs 406, as shown in FIG. 22. For example, the panel 104 may be installed on the standoffs 406 in substantially the same manner as described above with respect to FIG. 3.

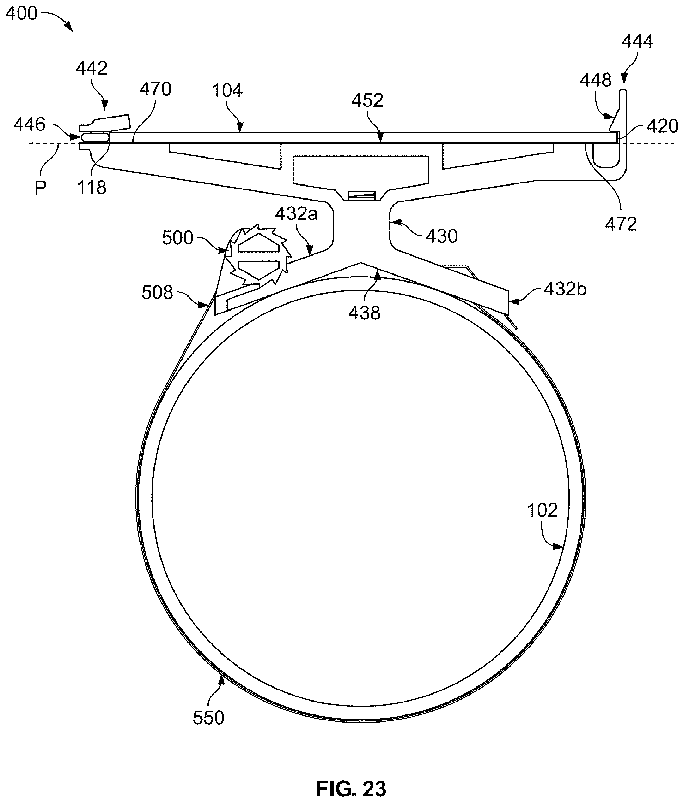

Thus, as shown in FIG. 23, the panel 104 may be positioned in the plane P and supported by the first support surface 470, the platform 452, and/or the second support surface 472 when the identification system 400 is assembled. The compressible member 446 may engage (e.g., apply a friction to) a first edge of the panel 104 (e.g., the first engagement edge 118), and the connector 448 may engage a second edge of the panel 104 (e.g., the second engagement edge 120), thereby securing the panel 104 in place against the standoffs 406. The connection member body 550 of each of the connection members 508 may extend around the pipe 102 and secure the associated standoff 406 thereto.

Turning to FIG. 24, another example standoff 606 may be provided for use with the identification system 100, the identification system 400, and/or other identifications not specifically described herein. The standoff 606 may be substantially similar to the standoff 106, and components of the standoff 606 and components of the standoff 106 with like names and reference numbers may be substantially similar in form and function.

The standoff 606 may include a mounting body 622 supported by a base member 624. The mounting body 622 may be defined by a mounting body first end 626 and a mounting body second end 628 opposing the mounting body first end 626, and a platform 652 may be positioned in a substantially central location with respect to the mounting body first and second ends 626, 628. The mounting body 622 may include a first retention mechanism 642 positioned proximate or adjacent to the mounting body first end 626, a second retention mechanism 644 positioned proximate or adjacent to the mounting body second end 628, a first arm 660a extending between the platform 652 and the first retention mechanism 642, and a second arm 660b extending between the platform 652 and the second retention mechanism 644. In some instances, the first retention mechanism 642 may be configured to slidingly receive a first edge of the panel 104 (e.g., the first engagement edge 118), and the second retention mechanism 644 may be configured to slidingly receive a second edge of the panel 104 (e.g., the second engagement edge 120).

The base member 624 may include a post 630 and two legs 632 coupled to the post 630 and extending outwardly therefrom. The legs 632 may form a contact surface 638 configured to be adjacent to or to contact the pipe 102 when the standoff 606 is installed. In the example of FIGS. 24-26, the legs 632 may be substantially similar to the legs 132 of the standoff 106 (see FIGS. 2-4). However, in other instances, the standoff 606 may be configured for use with the winder 500 , and the legs 632 may be substantially similar to the legs 432 of the standoff 406 (see FIG. 13). In still other instances, the legs 632 may be provided in other forms.

In some instances, the standoff 606 may include one or more spring members 658 configured to apply a force (e.g., a friction) to the panel 104 when the panel 104 is installed on the standoff 606. In the example of FIGS. 24-26, the standoff 606 may include a first spring member 658a and a second spring member 658b, each provided in the form of a plastic molded spring (e.g., substantially similar to the first and second spring members 158a, 158b of the standoff 106). However, in other instances, the one or more spring members 658 may be provided in the form of one or more compression springs (e.g., substantially similar to the spring member 258 of the standoff 206) or may be provided in other forms. In still other instances, the spring members 658 may be omitted.

The standoff 606 may differ from the standoffs 106, 206, 406 in that the standoff 606 may be configured to receive the panel 104 in a sliding manner (e.g., as opposed to installing the panel 104 in a snap fit or press fit, as described above). For example, the first and second retention mechanisms 642, 644 of the standoff 606 may be provided in substantially the same form. In some instances, each of the first and second retention mechanisms 642, 644 may include a support surface 670 and an upper support member 674 positioned proximate or adjacent to the support surface 670 and oriented substantially parallel thereto. The first and second retention mechanisms 642, 644 may each include an end wall 675 positioned at the mounting body first and second ends 626, 628, respectively, and the end wall 675 may extend between the support surface 670 and the upper support member 674. Thus, a slot 676 may be provided between the support surface 670 and the upper support member 674, and the slot 676 may be configured to receive and/or retain an edge of the panel 104.

The support surfaces 670 and the platform 652 may be positioned in the same plane P. In some instances, the first and second spring members 658a, 658b may include a spring distal end 666 positioned above the plane P when the first and second spring members 658a, 658b are in a default position (e.g., before the panel 104 is installed on the standoff 606). The first and second spring members 658a, 658b may also include a spring proximal end 664 coupled to the platform 652, and the first and second spring members 658a, 658b may be configured to flex or pivot about the spring proximal end 664 in substantially the same manner as described above with respect to the first and second spring members 158a, 158b of the standoff 106.

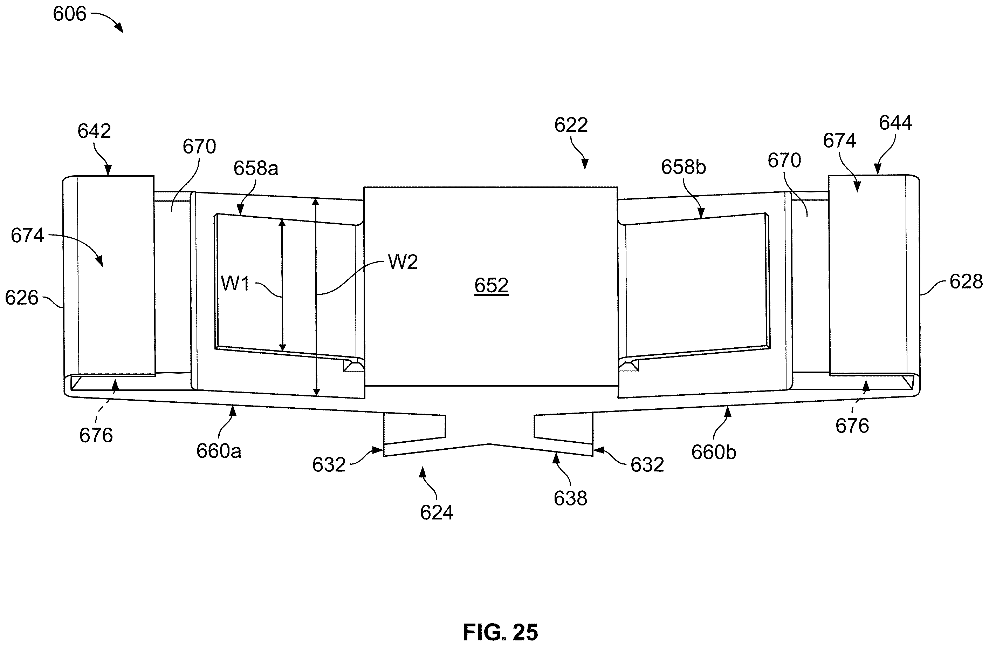

Turning to FIG. 25, in some instances, the first and second spring members 658a, 658b may be defined by a first width W1 and the mounting body 622 may be defined by a second width W2, as shown. In some instances, the first and second spring members 658a, 658b may have a smaller width than the mounting body 622 (e.g., the first width W1 may be imparted with a smaller value than the second width W2). The reduced width of the first and second spring members 658a, 658b may facilitate installation of the panel 104, as described below.

In some instances, a method of installing the panel 104 on the standoff 606 may begin with a user positioning the panel 104 in the plane P and adjacent to the mounting body 622. The user may then manually depress the first and second spring members 658a, 658b (e.g., by pressing down on the spring member distal end 666) until the first and second spring members 658a, 658b are positioned beneath the plane P. This clears a path for the panel 104 to slide into place. The user may move the panel 104 into the standoff 606 such that a first edge of the panel 104 (e.g., the first engagement edge 118) slides into the slot 676 of the first retention mechanism 642 and a second edge of the panel 104 (e.g., the second engagement edge 120) slides into the slot 676 of the second retention mechanism 644. Once the panel 104 is in place and supported by the support surfaces 670 and the platform 652, the first and second spring members 658a, 658b may engage a lower surface of the panel 104 and apply an upward force thereto. For example, the force applied by the first and second spring members 658a, 658b may retain the panel 104 on the standoff 606 by preventing or inhibiting the panel 104 from unintentionally moving or sliding with respect to the standoff 606 (e.g., by increasing a friction between the panel 104 and the first and second retention mechanisms 642, 644).

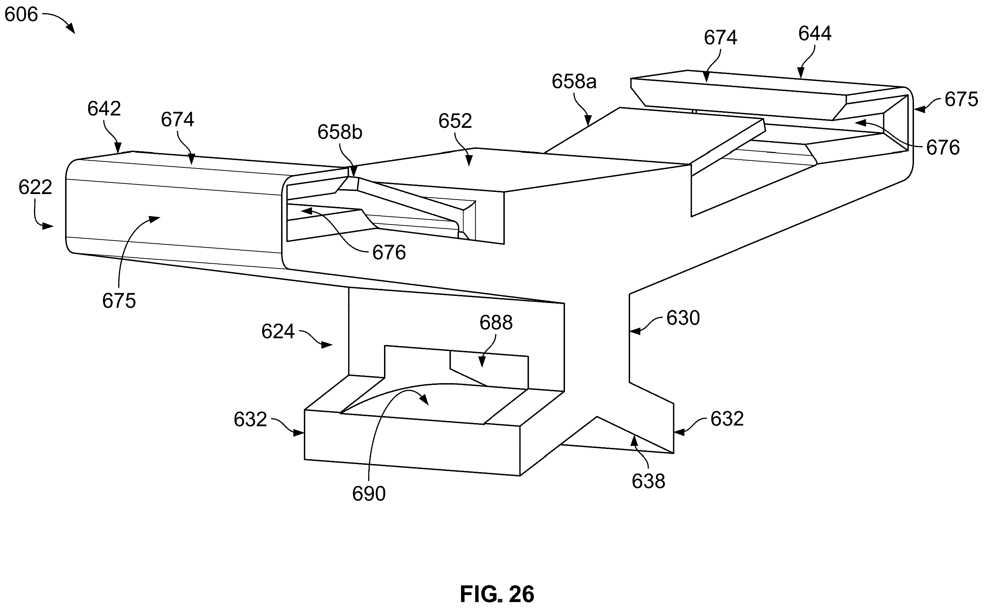

As best shown in FIG. 26, in some instances, the base member 624 of the standoff 606 may include an aperture 688 that facilitates coupling between the standoff 606 and the pipe 102. For example, the aperture 688 may enable the connection member 108 (or another component designed to encircle the pipe 102 and couple the standoff 606 thereto) to pass through the base member 624 and engage an aperture surface 690, thereby securing the standoff 606 against the pipe 102. However, in other instances, the aperture 688 may be omitted. For example, the legs 632 of the standoff 606 may be configured for use with the winder 500 and the connection member 508, as described above with reference to FIGS. 13-20. In still other instances, the standoff 606 may be coupled to the pipe 102 in any suitable manner.

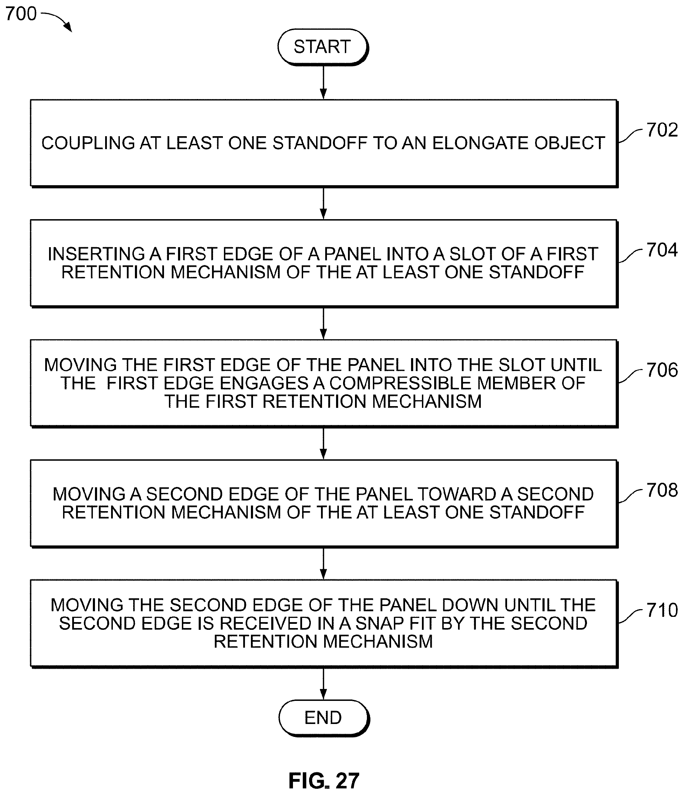

FIG. 27 illustrates an exemplary method 700 of installing an identification system (e.g., identification system 100, 400) onto an elongate object (e.g., a pipe 102).

At a step 702, a standoff (e.g., standoff 106, 206, 406) is coupled to an elongate object (e.g., pipe 102). The standoff includes a first retention mechanism (e.g., first retention mechanism 142, 242, 442) at one end and a second retention mechanism (e.g., second retention mechanism 144, 244, 444) at the other end of the standoff. In some instances, the standoff may be coupled to the elongate object using a connection member (e.g., connection member 108, 508) that encircles the elongate object and can be coupled to a base member (e.g., base member 124, 224, 424) of the standoff. For example, the connection member may surround the elongate object and extend through an aperture (e.g., aperture 188, 288) in the base member of the standoff.

In other instances, a winder (e.g., winder 500) may be provided to facilitate coupling the connection member to the standoff and/or to facilitate coupling the standoff to the elongate object. For example, the base member may include a holder (e.g., holder 504) configured to receive or support a portion of the winder. The base member may include a receiving hole (e.g., receiving hole 520) configured to receive a first end of the connection member (e.g., first connection end 546), and the winder may include a receiving slot (e.g., receiving slot 528) configured to receive a second end of the connection member (e.g., second connection end 548). The winder may further include a ratchet wheel (e.g., ratchet wheel 530) and/or a crank member (e.g., crank member 532). The ratchet wheel may be configured to prevent rotation of the winder in a first direction while permitting rotation of the winder in a second direction by engaging a pawl member (e.g., pawl member 518) coupled to the base member of the standoff. For example, when the second end of the connection member is received by the receiving slot of the winder, rotation of the winder in the second direction may tighten a fit or connection between the connection member (and thus the standoff) and the elongate object.

At a step 704, a first edge (e.g., first engagement edge 118) of a panel (e.g., panel 104) is inserted into a slot (e.g., slot 176) of the first retention mechanism of each standoff.

At a step 706, the first edge is moved or pressed into the slot until the first edge engages a compressible member (e.g., compressible member 146, 246, 446) of the first retention mechanism.

At a step 708, a second edge (e.g., second engagement edge 120) of the panel is moved toward the second retention mechanism. In some instances, the second retention mechanism includes an upright (e.g., upright 178, 278, 478), a connector (e.g., connector 148, 248, 448) positioned on the upright and arranged to be engaged by the second edge of the panel, and a flex region (e.g., flex region 184, 284, 484) that enables the connector to flex away from the second edge of the panel when the panel engages the connector. The panel may engage a spring member (e.g., spring member 158, 258, 458, 658) as the second edge moves toward the retention mechanism. For example, in some instances, the standoff may include one or more plastic molded springs (e.g., spring member 158, 658), and the panel may engage a distal end of the spring member (e.g., spring distal end 166) and cause the spring member to flex or pivot downwardly to accommodate the panel. In other instances, the standoff may include a compression spring (e.g., spring member 258, 458), and the panel may engage a free end of the spring member (e.g., free end 299, 499) and compress the spring member to accommodate the panel.

At a step 710, the second edge is moved or pressed down until the second edge is received in a snap fit by the second retention mechanism. For example, the second edge may engage a sloped surface (e.g., sloped surface 180) of the connector and cause the upright to flex away from the panel via the flex region until the second edge of the panel clears the connector and the upright returns to its initial position. When the second edge has been received by the second retention mechanism, the spring member may apply an upward force or a friction to the panel, thereby restricting the panel from moving out of place (e.g., by increasing a friction between the panel and the first and second retention mechanisms).

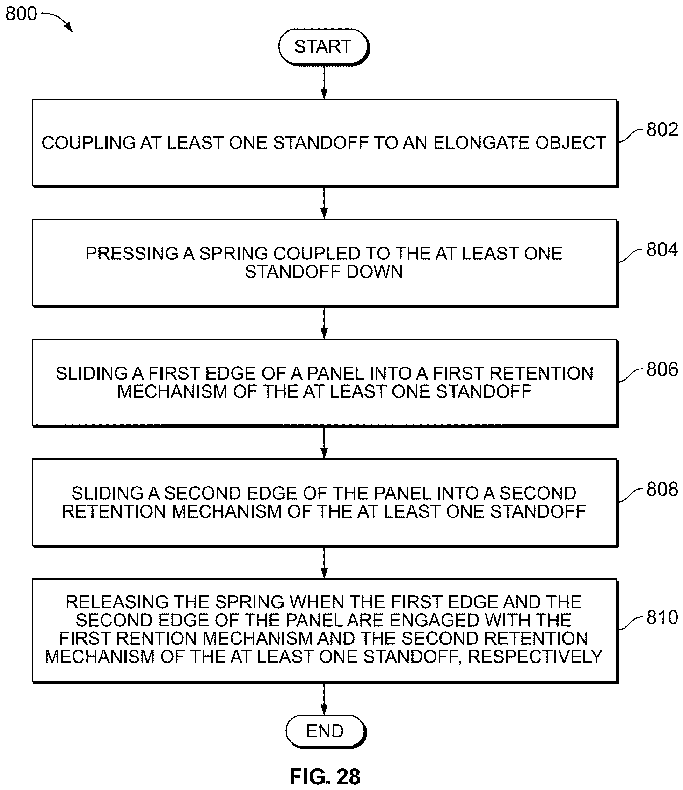

FIG. 28 illustrates another exemplary method 800 of installing an identification system (e.g., identification system 100, 400) onto an elongate object (e.g., a pipe 102).

At a step 802, a standoff (e.g., standoffs 606) is coupled to an elongate object (e.g., pipe 102). The standoff includes a first retention mechanism (e.g., first retention mechanism 642) at one end and a second retention mechanism (e.g., second retention mechanism 644) at the other end of the standoff. In some instances, the standoff may be coupled to the elongate object using a connection member (e.g., connection member 108, 508) that encircles the elongate object and can be coupled to a base member (e.g., base member 624) of the standoff. For example, the connection member may surround the elongate object and extend through an aperture (e.g., aperture 188, 288, 688) in the base member of the standoff.

At a step 804 a spring coupled to the standoff (e.g., spring member 658) is depressed or pressed down. For example, a user may depress the spring by engaging or pressing down on a distal end thereof (e.g., spring distal end 666), and depressing the spring may enable a panel (e.g., panel 104) to be slidingly installed on the standoff. In some instances, the spring may be imparted with a first width (e.g., first width W1), the standoff may be imparted with a second width (e.g., second width W2), and the first width may be less than the second width. Thus, in some instances, the panel may be at least partially positioned within the first and second retention mechanisms before the spring is pressed down.

At a step 806, a first edge of the panel (e.g., first engagement edge 118) slides into the first retention mechanism of the standoff. For example, the first edge of the panel may be received by the first retention mechanism and may be positioned within a slot (e.g., slot 676) thereof.

At a step 808, a second edge of the panel (e.g., second engagement edge 120) slides into the second retention mechanism of the standoff. For example, the second edge of the panel may be received by the second retention mechanism and may be positioned within a slot (e.g., slot 676) thereof.

At a step 810, the spring is released once the first edge of the panel is received by the first retention mechanism and the second edge of the panel is received by the second retention mechanism. When the spring is released, the spring may apply an upward force or a friction to the panel, thereby causing the panel to engage (or increasing an engagement of the panel with) the first and second retention mechanisms, thereby restricting the panel from moving out of place.

In Example 1, an identification system for an elongate object, comprising: a panel; a standoff configured to retain the panel at a distance from the elongate object; a connection member configured to couple the standoff to the elongate object; and a spring member configured to engage the panel when the panel is installed on the standoff, wherein the standoff includes: a first retention mechanism positioned proximate to a first end of the standoff, the first retention mechanism configured to receive a first edge of the panel; and a second retention mechanism positioned proximate to a second end of the standoff, the second retention mechanism configured to receive a second edge of the panel.

In Example 2, the identification system of Example 1, wherein the spring member is provided in the form of a compression spring.

In Example 3, the identification system of Example 1, wherein the standoff includes a mounting body supported by a base member, and wherein the base member includes two legs configured to provide two points of contact with the elongate object when the identification system is mounted thereon.

In Example 4, the identification system of Example 1, wherein the connection member surrounds the elongate object and extends through an aperture in the standoff.

In Example 5, the identification system of Example 1, wherein the standoff includes a first support surface, a second support surface, and a platform, wherein the first support surface, the second support surface, and the platform are all oriented in a common plane.

In Example 6, the identification system of Example 5, wherein the panel is positioned in the common plane and supported by the first support surface, the second support surface, and the platform when the panel is installed on the standoff.

In Example 7, the identification system of Example 5, wherein the spring member includes a pair of plastic molded springs coupled to opposing ends of the platform, and wherein the plastic molded springs each include a spring distal end positioned above the common plane when the plastic molded springs are in a default position.

In Example 8, the identification system of Example 1, wherein the first retention mechanism includes a compressible member configured to engage a portion of the panel and apply a friction thereto.

In Example 9, the identification system of Example 1, wherein the second retention mechanism includes an upright having a protrusion positioned on an interior surface thereof and a flex region that enables the upright to pivot away from the first retention mechanism when the panel is installed, and wherein the protrusion engages the panel and keeps the panel retained on the standoff.

In Example 10, a standoff for attaching a panel to an elongate object, comprising: a mounting body; a base member including: a post coupled to the mounting body; and two legs coupled to the post and extending outwardly therefrom at a downward angle and configured to contact the elongate object when the standoff is installed; a first retention mechanism positioned at a first end of the mounting body and configured to receive a first edge of the panel; and a second retention mechanism positioned at a second end of the mounting body and configured to receive a second end of the panel.

In Example 11, the standoff of Example 10, wherein the two legs include a first leg configured to support a winder and a second leg configured to receive a portion of a connection member, the connection member being configured to couple the standoff to the elongate object.

In Example 12, the standoff of Example 11, wherein the first leg includes two holders and a carveout positioned therebetween, and wherein each holder includes a receiving surface configured to receive a portion of the winder.

In Example 13, the standoff of Example 11, wherein the second leg includes two receiving holes.

In Example 14, the standoff of Example 13, wherein: the winder includes a receiving slot, the connection member includes a first end and a second end, the first end of the connection member is received by the receiving slot of the winder, and the second end of the connection member is received by the receiving holes of the second leg.

In Example 15, the standoff of Example 14, wherein the second end of the connection member includes two or more segments configured to be fed through the receiving holes of the second leg.

In Example 16, the standoff of Example 12, wherein the standoff includes a pawl member positioned on the first leg, and wherein the pawl member inhibits rotation of the winder in a first direction while permitting rotation of the winder in a second direction.

In Example 17, the standoff of Example 16, wherein the winder includes: a body that is received by the receiving surface of the holders; a ratchet wheel positioned at an end of the body and configured to engage the pawl member; and a crank member that can be engaged to turn the winder manually positioned adjacent to the ratchet wheel.

In Example 18, the standoff of Example 10, wherein the first edge of the panel slides into the first retention mechanism and the second edge of the panel is received in a snap fit by the second retention mechanism.

In Example 19, the standoff of Example 10, wherein the first edge of the panel is slidingly received by the first retention mechanism and the second edge of the panel is slidingly received by the second retention mechanism.

In Example 20, a method of installing a pipe marker on an elongate object, comprising: coupling a standoff to the elongate object, the standoff including a first retention mechanism positioned at a first end of the standoff and a second retention mechanism positioned at a second end of the standoff; inserting a first edge of a panel into a slot of the first retention mechanism of the standoff; moving the first edge of the panel into the slot until the first edge engages a compressible member of the first retention mechanism; moving a second edge of the panel toward the second retention mechanism; and moving the second edge of the panel toward the second retention mechanism until the second edge is received in a snap fit by the second retention mechanism. It will be appreciated by those skilled in the art that while the above disclosure has been described above in connection with particular embodiments and examples, the above disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference as if each such patent or publication were individually incorporated by reference herein. Various features and advantages of the above disclosure are set forth in the following claims.

## Claims

1. An identification system for an elongate object, comprising:
a panel;
a standoff configured to retain the panel at a distance from the elongate object;
a connection member configured to couple the standoff to the elongate object; and
a spring member configured to engage the panel when the panel is installed on the standoff,
wherein the standoff includes:
a first retention mechanism positioned proximate to a first end of the standoff, the first retention mechanism configured to receive a first edge of the panel; and
a second retention mechanism positioned proximate to a second end of the standoff, the second retention mechanism configured to receive a second edge of the panel.

2. The identification system of claim 1, wherein the spring member is provided in the form of a compression spring.

3. The identification system of claim 1 or 2, wherein the standoff includes a mounting body supported by a base member, and wherein the base member includes two legs configured to provide two points of contact with the elongate object when the identification system is mounted thereon.

4. The identification system of any one of claims 1 to 3, wherein the connection member surrounds the elongate object and extends through an aperture in the standoff.

5. The identification system of any one of claims 1 to 4, wherein the standoff includes a first support surface, a second support surface, and a platform, wherein the first support surface, the second support surface, and the platform are all oriented in a common plane.

6. The identification system of claim 5, wherein the panel is positioned in the common plane and supported by the first support surface, the second support surface, and the platform when the panel is installed on the standoff.

7. The identification system of claim 5 or 6, wherein the spring member includes a pair of plastic molded springs coupled to opposing ends of the platform, and wherein the plastic molded springs each include a spring distal end positioned above the common plane when the plastic molded springs are in a default position.

8. The identification system of any one of claims 1 to 7, wherein the first retention mechanism includes a compressible member configured to engage a portion of the panel and apply a friction thereto.

9. The identification system of any one of claims 1 to 8, wherein the second retention mechanism includes an upright having a protrusion positioned on an interior surface thereof and a flex region that enables the upright to pivot away from the first retention mechanism when the panel is installed, and wherein the protrusion engages the panel and keeps the panel retained on the standoff.

10. The identification system of claim 1, wherein the standoff comprises:
a mounting body;
a base member including:
a post coupled to the mounting body; and
two legs coupled to the post and extending outwardly therefrom at a downward angle and configured to contact the elongate object when the standoff is installed; wherein
the first retention mechanism is positioned at a first end of the mounting body; and
the second retention mechanism is positioned at a second end of the mounting body.

11. The identification system of claim 10, wherein the two legs include a first leg configured to support a winder and a second leg configured to receive a portion of a connection member, the connection member being configured to couple the standoff to the elongate object.

12. The identification system of claim 11, wherein the first leg includes two holders and a carveout positioned therebetween, and wherein each holder includes a receiving surface configured to receive a portion of the winder.

13. The identification system of claim 11 or 12, wherein the second leg includes two receiving holes.

14. The identification system of any one of claims 11 to 13, wherein:
the winder includes a receiving slot,
the connection member includes a first end and a second end,
the first end of the connection member is received by the receiving slot of the winder, and
the second end of the connection member is received by the receiving holes of the second leg.

15. A method of installing a pipe marker on an elongate object, comprising:
coupling a standoff to the elongate object, the standoff including a first retention mechanism positioned at a first end of the standoff and a second retention mechanism positioned at a second end of the standoff;
inserting a first edge of a panel into a slot of the first retention mechanism of the standoff;
moving the first edge of the panel into the slot until the first edge engages a compressible member of the first retention mechanism;
moving a second edge of the panel toward the second retention mechanism; and
moving the second edge of the panel toward the second retention mechanism until the second edge is received in a snap fit by the second retention mechanism.
